# EUROPEAN PATENT APPLICATION

(11) **EP 4 681 900 A1**
(43) Date of publication of application: **21.01.2026**
(21) Application number: 25186982.2
(22) Date of filing: 02.07.2025
(51) Int. Cl.: B29C 44/42, B29C 35/16, B29C 45/37, B29D 35/00, B29D 35/12, B29L 31/50

(54) **INJECTION MOLDING DEVICE, INJECTION MOLDING METHOD AND ARTICLE FORMED THEREOF**

(30) Priority: 19.07.2024 US 202463673187 P; 23.03.2025 US 202519087570
(71) Applicant: King Steel Machinery Co., Ltd., Taichung City 407 (TW)
(72) Inventor: CHEN, CHING-HAO, TAICHUNG CITY 407, TAIWAN, R.O.C. (TW); LEE, YI-CHUNG, TAICHUNG CITY 411, TAIWAN, R.O.C. (TW)
(74) Representative: Michalski Hüttermann & Partner Patentanwälte mbB

(57) **Abstract**

An injection molding method is provided. A molding device (100) is provided and includes a first mold (101), a second mold (102) over the first mold (101) and a mold cavity (103) defined by the first mold (101) and the second mold (102). A first mixture is injected into the mold cavity (103) through a first feeding port (104). A first component is formed from the first mixture. A second mixture is injected into the mold cavity (103) through a second feeding port (104). A second component is formed from the second mixture. The second component is at least partially contact with the first component, and the first component and the second component have different physical properties.

## Description

### CROSS-REFERENCE TO RELATED APPLICATION

The present application claims priority to U.S. Non-Provisional Application No. 19/087,570 filed on March 23, 2025 and U.S. Provisional Patent Application No. 63/673,187, filed on July 19, 2024, which is incorporated by reference herein in their entirety.

### TECHNICAL FIELD

The present disclosure discloses an injection molding device, an injection molding method and an article formed thereof, and particularly an injection molding device implementing an injection molding method to form an article including more than one portion having different physical or functional properties.

### BACKGROUND

Foamed polymeric material has many advantages, such as high strength, low weight, impact resistance, thermal insulation, and others. Foamed articles can be made by injection molding or extrusion molding. For example, after the polymeric material is melted and mixed with a blowing agent to form a mixture, a force or pressure is applied to the mixture to inject or extrude the mixture into a cavity of a mold, and the mixture is foamed and cooled in the cavity to form the foamed article.

However, it is necessary to improve the properties of the foamed article made by the injection molding system, such as causing different portions of the foamed article to have different properties. Therefore, there is a need for improvements to structures of the injection-molding system and the method for making foamed articles.

### BRIEF SUMMARY OF THE DISCLOSURE

The present disclosure discloses an injection molding device, an injection molding method and an article formed thereof.

According to one embodiment of the present disclosure, a molding method is provided. The molding method includes: providing a molding device including a first mold and a second mold, wherein the first mold includes a recess recessed into the first mold, and the second mold includes a feeding port extending through the second mold; engaging the first mold with the second mold to form a mold cavity defined by the first mold and the second mold, wherein the mold cavity is communicable with the recess and the feeding port; injecting a flowable material into the mold cavity through the feeding port to fill the recess and the mold cavity; and foaming the flowable material to a foamed article.

According to one embodiment of the present disclosure, a molding method is provided. The molding method includes: providing a molding device including a first mold and a second mold, wherein the first mold includes a cooling mechanism embedded in the first mold, and the second mold includes a feeding port extending through the second mold; engaging the first mold with the second mold to form a mold cavity defined by the first mold and the second mold; injecting a flowable material into the mold cavity through the feeding port; operating the cooling mechanism to cool down the flowable material around the cooling mechanism; and foaming the flowable material to a foamed article.

According to one embodiment of the present disclosure, a foamed article is provided. The foamed article includes a first surface, a second surface opposite to the first surface, and a third surface between the first surface and the second surface. The foamed article includes a first trace and a second trace. The first trace is disposed on the first surface. The second trace is disposed on the second surface, opposite to the first trace and vertically aligned with the first trace.

### BRIEF DESCRIPTION OF THE DRAWINGS

Aspects of the present disclosure are best understood from the following detailed description when read with the accompanying figures. It should be noted that, in accordance with the standard practice in the industry, various features are not drawn to scale. In fact, the dimensions of the various features may be arbitrarily increased or reduced for clarity of discussion.
FIG. **1** is a schematic of an injection molding device in an open configuration in accordance with one embodiment of the present disclosure.
FIG. **2** is a schematic of an injection molding device in a closed configuration in accordance with one embodiment of the present disclosure.
FIG. **3** is a schematic cross-sectional view illustrating engaging an injector with the feeding port in accordance with one embodiment of the present disclosure.
FIG. **4** is a schematic cross-sectional view illustrating a flowable material is injected into the mold cavity from the injector through the outlet and the feeding port in accordance with one embodiments of the present disclosure.
FIGs. **5-8** are schematic cross-sectional views illustrating exemplary stages in the injection molding method according to one embodiment of the present disclosure.
FIGs. **9-12** are schematic views illustrating the foamed article according to one embodiment of the present disclosure.
FIG. **13** is a schematic of an injection molding device in accordance with one embodiment of the present disclosure.
FIG. **14** is a schematic cross-sectional view illustrating engaging an injector with the feeding ports in accordance with one embodiment of the present disclosure.
FIG. **15** is a schematic cross-sectional view illustrating engaging multiple injectors with the feeding ports in accordance with one embodiment of the present disclosure.
FIG. **16** is a schematic cross-sectional view illustrating a flowable material is injected into the mold cavity from the injectors through the outlets and the feeding ports in accordance with one embodiments of the present disclosure.
FIGs. **17-20** are schematic cross-sectional views illustrating exemplary stages in the injection molding method according to one embodiment of the present disclosure.
FIGs. **21-24** are schematic views illustrating the foamed article according to one embodiment of the present disclosure.
FIG. **25** is a schematic of an injection molding device in accordance with one embodiment of the present disclosure.
FIG. **26** is a schematic top cross-sectional view of the injection molding device along a line **CC'** in FIG. **25****.**
FIG. **27** is a schematic cross-sectional view illustrating engaging an injector with the feeding port in accordance with one embodiment of the present disclosure.
FIGs. **28-29** are schematic cross-sectional views illustrating exemplary stages in the injection molding method according to one embodiment of the present disclosure.
FIGs. **30-34** are schematic views illustrating the foamed article according to one embodiment of the present disclosure.
FIG. **35** is a schematic of an injection molding device in accordance with one embodiment of the present disclosure.
FIG. **36** is a schematic top cross-sectional view of the first mold along a line **DD'** in FIG. **35****.**
FIG. **37** is a schematic top cross-sectional view of the second mold along a line **EE'** in FIG. **35****.**
FIGs. **38-42** are schematic views illustrating the foamed article according to one embodiment of the present disclosure.
FIG. **43** is a schematic of an injection molding device in accordance with one embodiment of the present disclosure.
FIG. **44** is a schematic top cross-sectional view of the first mold along a line **FF'** in FIG. **43****.**
FIGs. **45-48** are schematic cross-sectional views illustrating exemplary stages in the injection molding method according to one embodiment of the present disclosure.
FIGs. **49-52** are schematic views illustrating the foamed article according to one embodiment of the present disclosure.
FIGs. 53-54 are schematic views of an injection molding device in accordance with one embodiment of the present disclosure.
FIGs. **55-58** are schematic cross-sectional views illustrating exemplary stages in the injection molding method according to one embodiment of the present disclosure.
FIG. **59** is a schematic of an injection molding device in accordance with one embodiment of the present disclosure.
FIGs. **60-66** are schematic cross-sectional views illustrating exemplary stages in the injection molding method according to one embodiment of the present disclosure.
FIG. **67** is a schematic of an injection molding device in accordance with one embodiment of the present disclosure.
FIG. **68** is a schematic top cross-sectional view of the injection molding device along a line **GG'** in FIG. **67****.**
FIG. **69** is a schematic cross-sectional view illustrating engaging an injector with the feeding port in accordance with one embodiment of the present disclosure.
FIGs. **70-71** are schematic cross-sectional views illustrating exemplary stages in the injection molding method according to one embodiment of the present disclosure.
FIGs. **72-76** are schematic views illustrating the foamed article according to one embodiment of the present disclosure.
FIG. 77 is a schematic of an injection molding device in accordance with one embodiment of the present disclosure.
FIG. **78** is a schematic top cross-sectional view of the injection molding device along a line **HH'** in FIG. **77****.**
FIG. **79** is a schematic cross-sectional view illustrating engaging an injector with the feeding port in accordance with one embodiment of the present disclosure.
FIGs. **80-81** are schematic cross-sectional views illustrating exemplary stages in the injection molding method according to one embodiment of the present disclosure.
FIGs. 82-85 are schematic views illustrating the foamed article according to one embodiment of the present disclosure.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above" "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in the respective testing measurements. Also, as used herein, the term "about" generally means within 10%, 5%, 1%, or 0.5% of a given value or range. Alternatively, the term "about" means within an acceptable standard error of the mean when considered by one of ordinary skill in the art. Other than in the operating/working examples, or unless otherwise expressly specified, all of the numerical ranges, amounts, values and percentages, such as those for quantities of materials, durations of times, temperatures, operating conditions, ratios of amounts, and the likes thereof disclosed herein, should be understood as modified in all instances by the term "about." Accordingly, unless indicated to the contrary, the numerical parameters set forth in the present disclosure and the attached claims are approximations that can vary as desired. At the very least, each numerical parameter should be construed in light of the number of reported significant digits and by applying ordinary rounding techniques. Ranges can be expressed herein as from one endpoint to another endpoint or between two endpoints. All ranges disclosed herein are inclusive of the endpoints, unless specified otherwise.

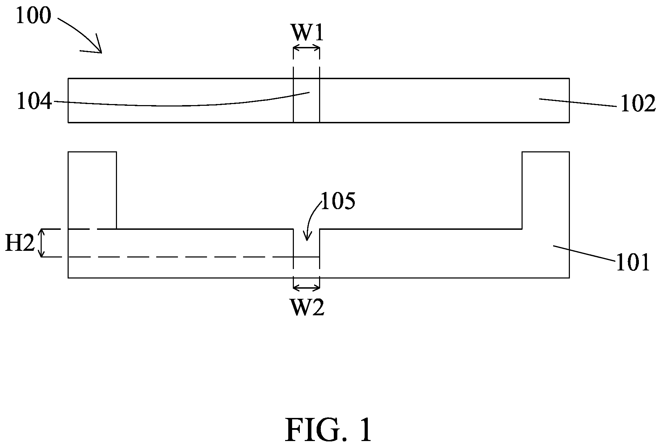

In some embodiments, a first injection molding device **100** in an open configuration is illustrated in FIG. **1****.** In some embodiments, the first injection molding device **100** is configured to form a foamed article. The first injection molding device **100** includes a first mold **101** and a second mold **102** engageable with the first mold **101.** In some embodiments, the first mold **101** is disposed under the second mold **102.** In some embodiments, the first mold **101** is a lower mold, and the second mold **102** is an upper mold. The first injection molding device **100** includes a feeding port **104** configured to allow a flowable material passing through. In some embodiments, the feeding port **104** is disposed at the first mold **101** or the second mold **102.** Although FIG. **1** illustrates the feeding port **104** at the second mold **102,** it would be understood that it is not limited. In some embodiments, the first injection molding device **100** includes a well **105** recessed into the first mold **101** or the second mold **102.** Although FIG. **1** illustrates the well **105** is disposed at and recessed into the first mold **101,** it would be understood that it is not limited. In some embodiments, the well **105** is configured to temporarily hold a material. In some embodiments, the well **105** is a cold slug, a cold well or the like. In some embodiments, a width **W1** of the feeding port **104** is substantially different from or identical to a width **W2** of the well **105.** In some embodiments, the width **W1** is substantially greater or smaller than the width **W2.** In some embodiments, a ratio of the width **W2** to a height of the well **105** is about 1: 1 to about 1:1.5. In some embodiments, the width **W2** is about 5mm to about 10mm.

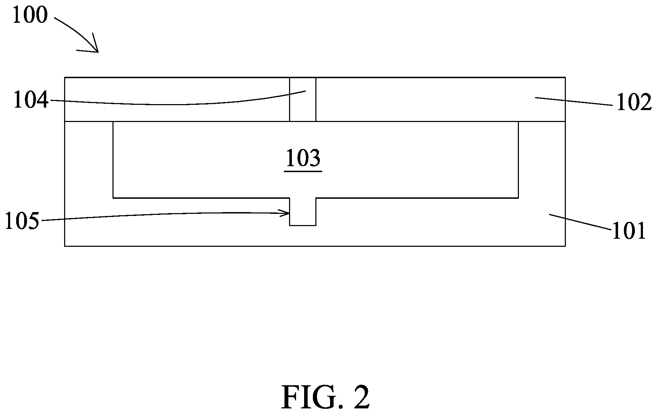

FIG. 2 illustrates the first injection molding device **100** in a closed configuration, that the first mold **101** is engaged with the second mold **102.** In some embodiments, a mold cavity **103** is formed when the first injection molding device **100** is in the closed configuration. The mold cavity **103** is configured to hold a material. The feeding port **104** is communicable with the mold cavity **103.** In some embodiments, the feeding port **104** is vertically aligned with the well **105** when the first injection molding device **100** is in the closed configuration.

In some embodiments, an injection molding method includes several steps as illustrated in FIGS. **1** to **12****.** The first injection molding device **100** is configured to implement the injection molding method.

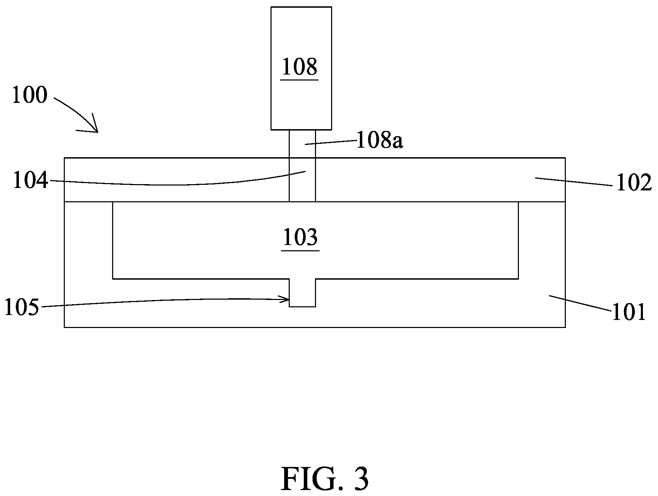

The injection molding method includes providing the first injection molding device **100** including the first mold **101** and the second mold **102** as shown in FIG. **1****,** and then engaging the first mold **101** with the second mold **102** as shown in FIG. 2. In some embodiments, the injection molding method includes engaging an injector **108** with the feeding port **104** as shown in FIG. **3****.** In some embodiments, the injector **108** is engaged with the feeding port **104** before or after the engagement of the first mold **101** and the second mold **102.** In some embodiments, an outlet **108a** of the injector **108** is engaged with the feeding port **104** before or after the engagement of the first mold **101** and the second mold **102.** In some embodiments, the injector **108** is configured to inject a flowable material into the mold cavity **103** through the outlet **108a** and the feeding port **104.** In some embodiments, the injector **108** is connected to a mixing unit configured to mix a polymeric material with a blowing agent. In some embodiments, the flowable material is a mixture of a polymeric material (such as polyurethane (PU), thermoplastic polyurethane (TPU), etc.) and a blowing agent (such as physical blowing agent, for example carbon dioxide, nitrogen, supercritical fluid, etc.). The mixture is foamable or slightly foamable. The mixture can undergo a physical foaming process within the mold cavity **103.** The mixture inside the mold cavity **103** becomes a foamed article after the physical foaming process.

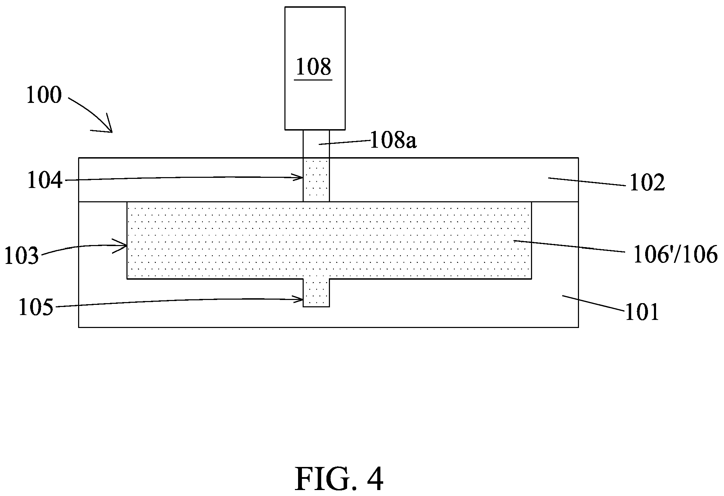

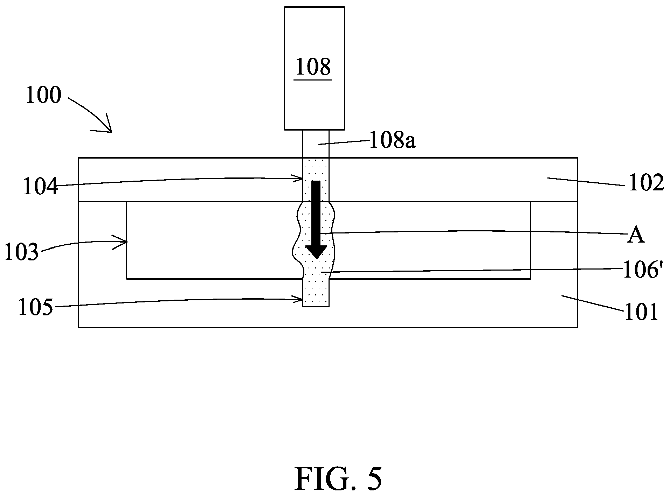

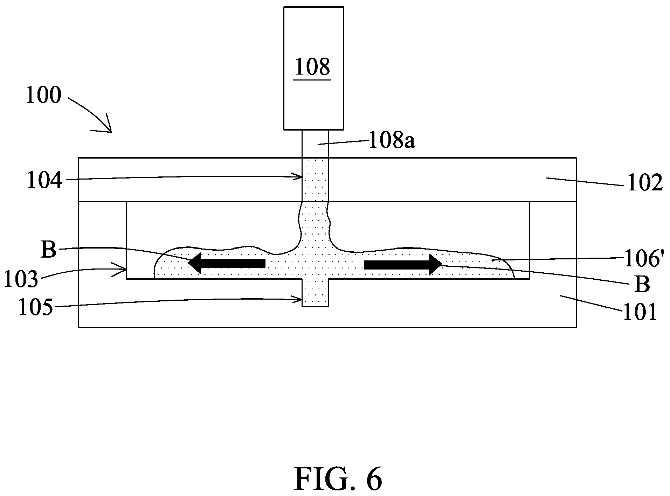

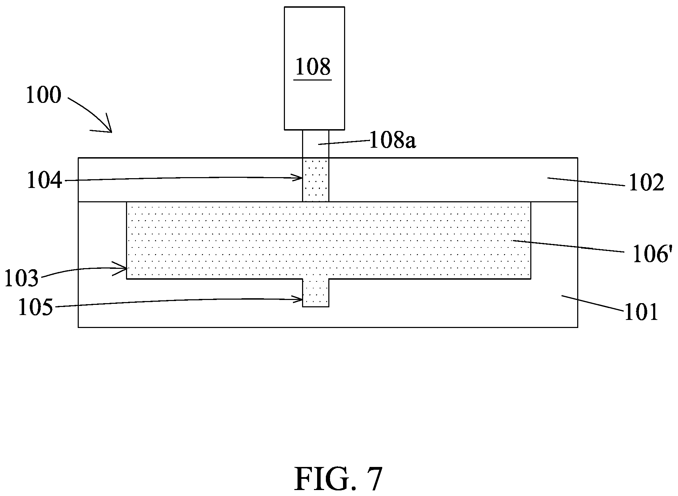

The injection molding method includes injecting a flowable material inside the first injection molding device **100.** FIG. **4** illustrates a flowable material **106'** is injected into the mold cavity **103** from the injector **108** through the outlet **108a** and the feeding port **104.** In some embodiments, a flow of the flowable material **106'** is illustrated by FIGS. **5 to 7****.** In some embodiments, when the flowable material **106'** is injected from the outlet **108a** of the injector **108,** the flowable material **106'** flows through the feeding port **104** and the mold cavity **103** toward the well **105** as shown by an arrow **A** in FIG. **5****.** As such, some of the flowable material **106'** is disposed within the well **105.** The flowable material **106'** is then continued to flow toward two sidewalls of the mold cavity **103** as shown by an arrow **B** in FIG. **6****.** In some embodiments, after filling the well **105** with the flowable material **106',** the flowable material **106'** continues to flow toward two sidewalls of the mold cavity **103.** In some embodiments, the flowable material **106'** ultimately fills the mold cavity **103** as shown in FIG. **7****.** After the injection of the flowable material **106',** the flowable material **106'** undergoes physical foaming inside the mold cavity **103** to become a foamed article **106** as shown in FIG. **4****.**

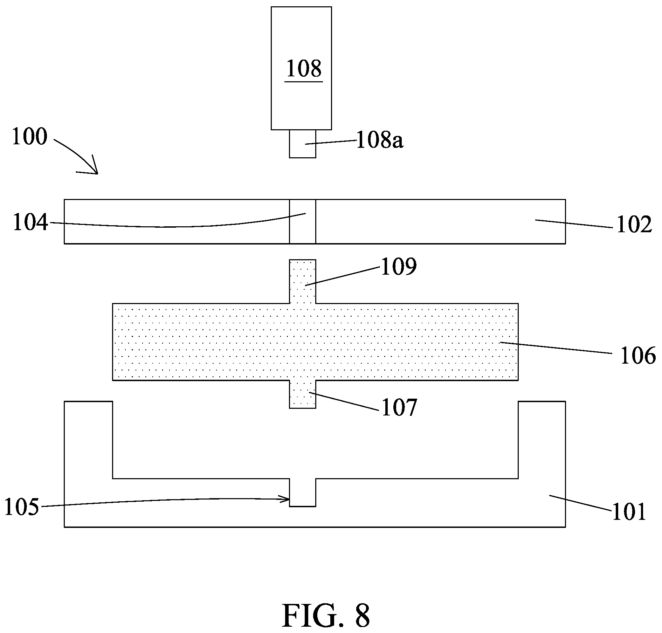

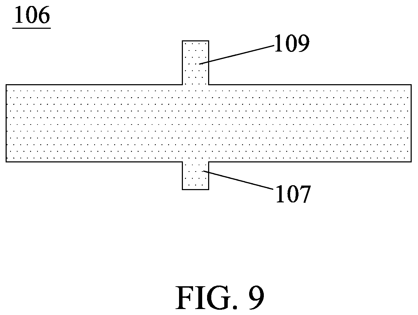

The injection molding method includes disengaging the first mold **101** from the second mold **102** to open the first injection molding device **100.** FIG. **8** illustrates an opening of the first injection molding device **100** after the formation of the foamed article **106.** In some embodiments, the outlet **108a** of the injector **108** is disengaged with the feeding port **104** before or after the disengagement of the first mold **101** with the second mold **102.** After the opening of the first injection molding device **100,** the foamed article **106** is taken out from the first injection molding device **100** as shown in FIGS. **8** and **9****.**

The injection molding method includes forming an article by foaming process. FIG. **9** illustrates the foamed article **106** formed by the first injection molding device **100.** In some embodiments, the foamed article **106** includes a first protrusion **107** and a second protrusion **109.** In some embodiments, the first protrusion **107** is vertically aligned with the second protrusion **109.** In some embodiments, the first protrusion **107** corresponds to and is complementary to at least a portion of the well **105,** and the second protrusion **109** corresponds to and is complementary to at least a portion of the feeding port **104.**

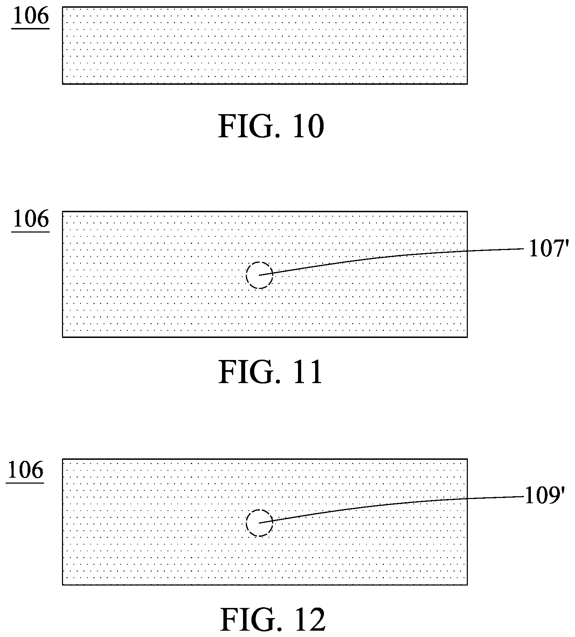

In some embodiments, the first protrusion **107** and the second protrusion **109** are removed as shown in FIGS. **10** to **12.** FIG. **10** is a schematic side view of the foamed article **106,** FIG. **11** is a schematic bottom view of the foamed article **106,** and FIG. **12** is a schematic top view of the foamed article **106.** In some embodiments, the first protrusion **107** and the second protrusion **109** are removed by cutting, trimming, grinding or any other suitable process. As a result, a first trimming trace **107'** is formed on a bottom surface of the foamed article **106,** and a second trimming trace **109'** is formed on a top surface of the foamed article **106.** In some embodiments, the first trimming trace **107'** and the second trimming trace **109'** do not include a skin layer because a skin layer is damaged or removed by the trimming process. In some embodiments, the foamed article **106** is a component of a footwear article, such as an outsole or the like.

Referring back to FIG. **5****,** since the flowable material **106'** flows into and fills the well **105** first and then fills the mold cavity **103,** a flow trace surrounding the first protrusion **109** and disposed on the top surface of the foamed article **106** is absent or minimized. Further, the flowable material **106'** inside the first injection molding device **100** has undergone a uniform foaming, and as a result pores inside the foamed article **106** are more evenly distributed and an overall density of the foamed article **106** is also more uniform.

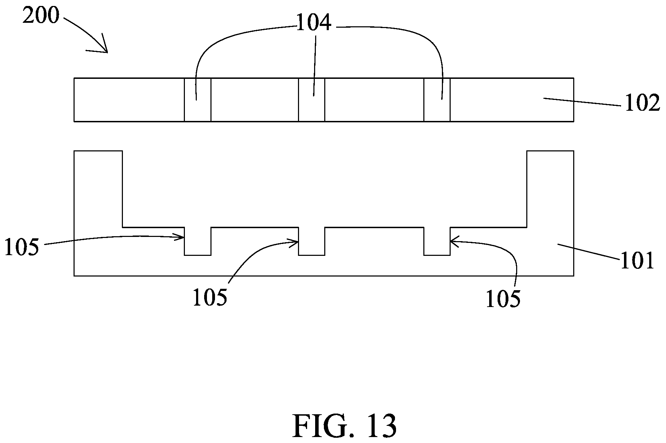

Alternatively, a second injection molding device **200** is used as shown in FIGS. **13** to **24****.** In some embodiments, the second injection molding device **200** is similar to the first injection molding device **100,** except the quantities of the wells **105** and the feeding ports **104.** As illustrated in FIG. **13****,** in some embodiments, the second injection molding device **200** includes several wells **105** and several feeding ports **104** corresponding to the wells **105.** In some embodiments, each well **105** corresponds to one feeding port **104.** In some embodiments, each well **105** is vertically aligned with the corresponding one of the feeding ports **104.**

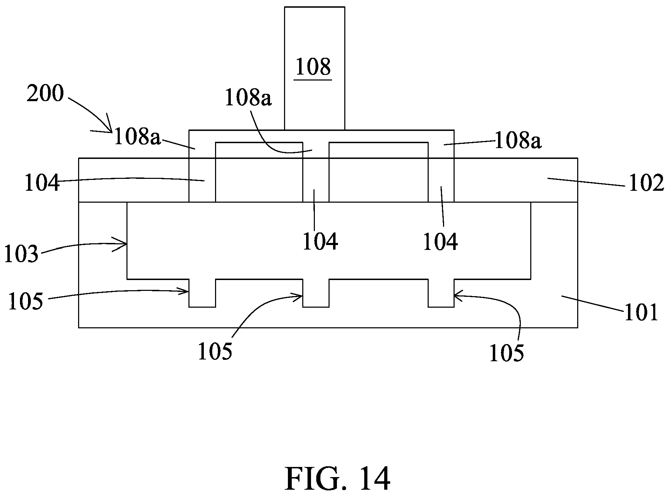

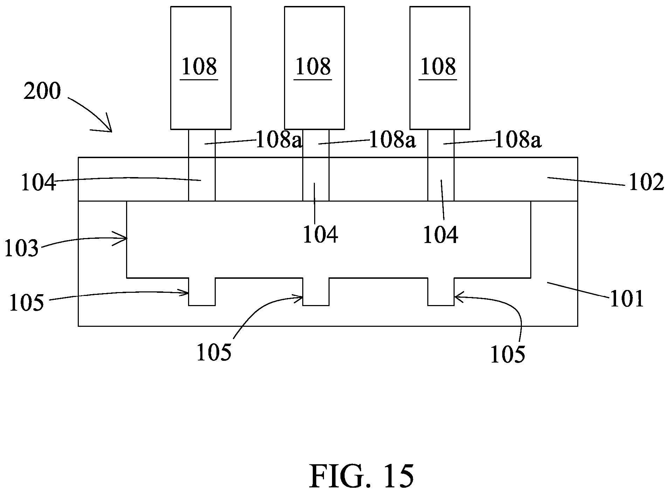

FIG. **14** illustrates the injector **108** is engaged with the second injection molding device **200.** In some embodiments, the injector **108** is engaged with the feeding ports **104** before or after the engagement of the first mold **101** and the second mold **102.** In some embodiments, the injector **108** includes several outlets **108a** engageable with one of the feeding ports **104.** Alternatively, several injectors **108** are engaged with the second injection molding device **200** as shown in FIG. **15****.** In some embodiments, each injector **108** has the outlet **108a,** and the outlet **108a** is engageable with the feeding port **104.**

For simplicity and clarity, injectors **108** engaging the second injection molding device **200** is illustrated in subsequent figures for describing subsequent steps. However, it would be understood that the injector **108** of FIG. 14 can also implement the subsequent steps in similar way.

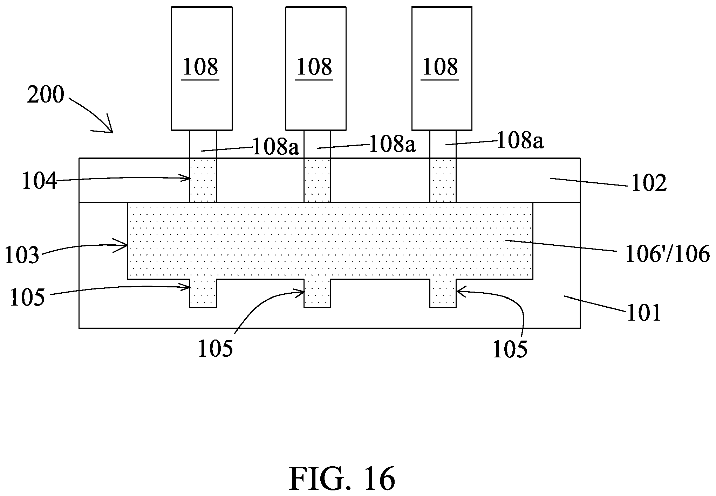

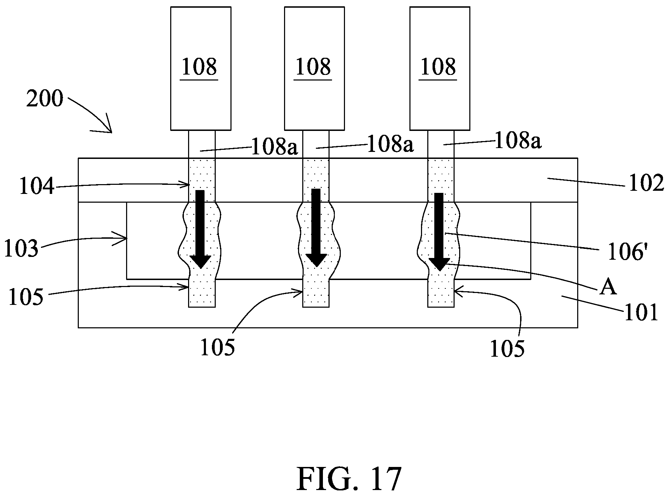

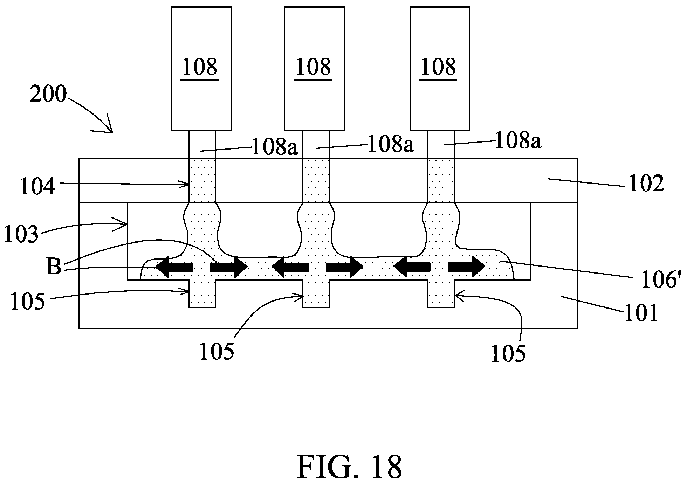

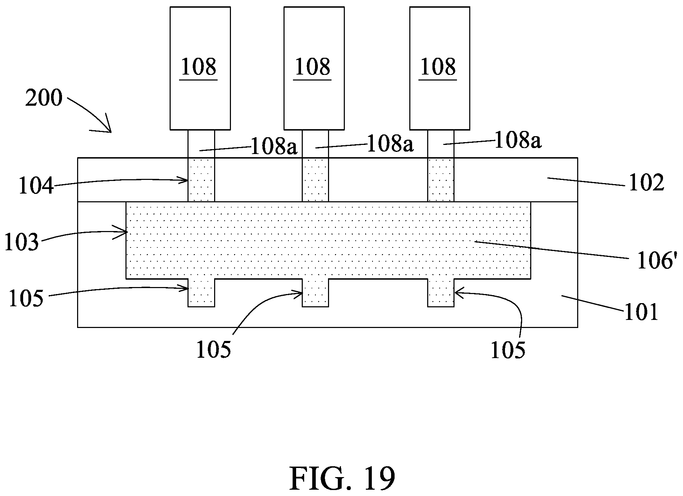

After the engagement of the injector **108** with the second injection molding device **200,** the flowable material **106'** is injected into the mold cavity **103** from the injector **108** through the outlet **108a** and the feeding port **104** as shown in FIG. **16****.** In some embodiments, a flow of the flowable material **106'** is illustrated by FIGS. **17** to **19****.** In some embodiments, when the flowable material **106'** is injected from the outlet **108a** of the injector **108,** the flowable material **106'** flows through the feeding port **104** and the mold cavity **103** toward the well **105** as shown by an arrow **A** in FIG. **17****,** similar to a way described above or illustrated in FIG. **5****.** As such, some of the flowable material **106'** is disposed within the well **105.** The flowable material **106'** is then continued to flow toward two sidewalls of the mold cavity **103** as shown by an arrow **B** in FIG. **18****,** similar to a way described above or illustrated in FIG. **6****.** In some embodiments, the flowable material **106'** ultimately fills the mold cavity **103** as shown in FIG. **19****.** After the injection of the flowable material **106',** the flowable material **106'** undergoes physical foaming inside the mold cavity **103** to become a foamed article **106** as shown in FIG. **16****.**

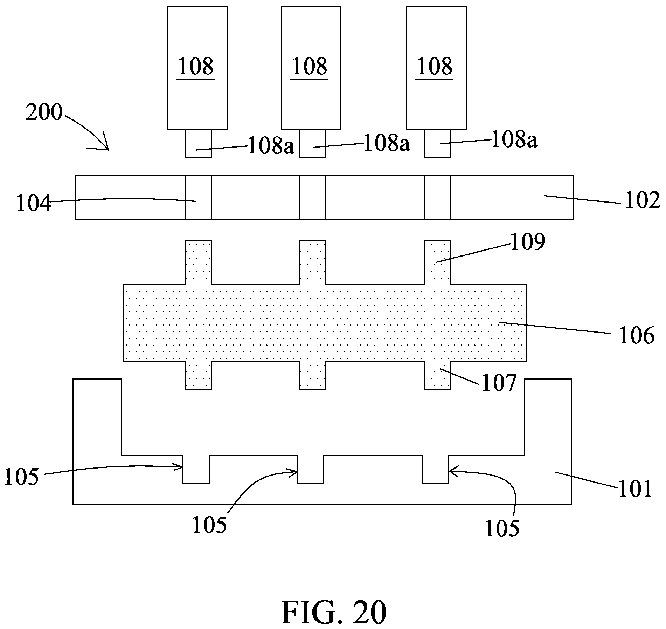

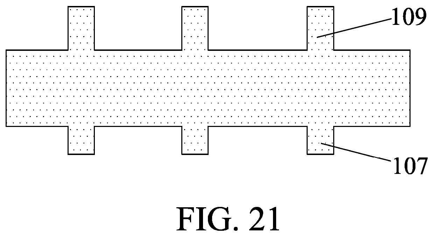

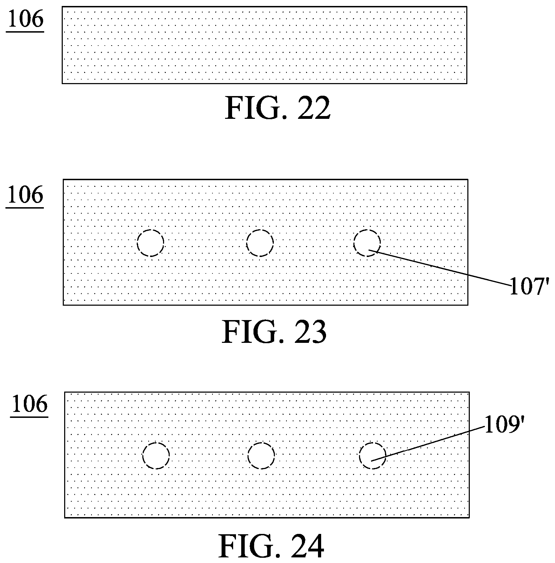

After the formation of the foamed article **106,** the second injection molding device **200** is open to take out the foamed article **106** as shown in FIG. **20****,** similar to a way described above or illustrated in FIG. **8****.** FIG. **21** illustrated the foamed article **106** formed by the second injection molding device **200,** similar to the foamed article **106** described above or illustrated in FIG. **9****.** In some embodiments, the first protrusions **107** and the second protrusions **109** are removed as shown in FIGS. **22** to **24****,** similar to a way described above or illustrated in FIGS. **10** to **12****.** FIG. **22** is a schematic side view of the foamed article **106,** FIG. **23** is a schematic bottom view of the foamed article **106,** and FIG. **24** is a schematic top view of the foamed article **106.**

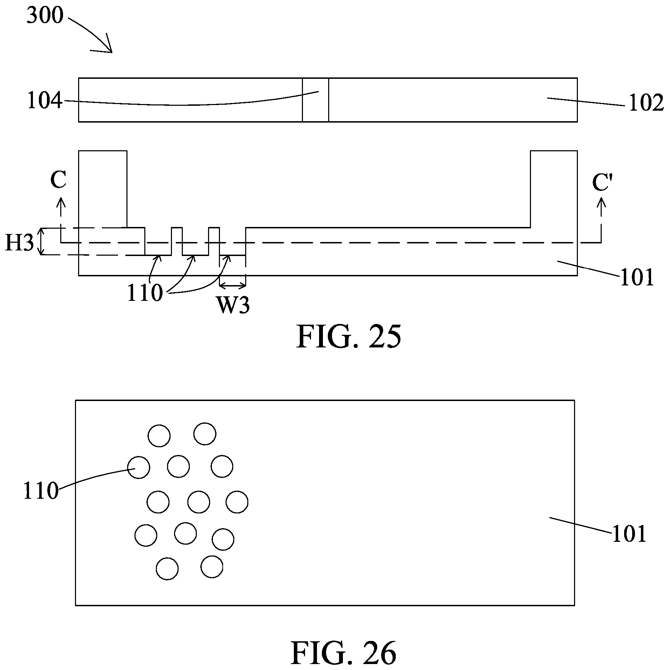

In some embodiments, a third injection molding device **300** is used for implementing another injection molding method having several steps as illustrated in FIGS. **25** to **34****.** FIG. **25** illustrates the third injection molding device **300** in an open configuration. In some embodiments, the third injection molding device **300** includes the first mold **101,** the second mold **102** and the feeding port **104,** which are similar to those in the first or second injection molding devices **100** or **200.** FIG. **25** shows one feeding port **104** only, but it would be understood that more than one feeding port **104** can be included. In some embodiments, the third injection molding device **300** includes several recesses **110** indented into the first mold **101** or the second mold **102.** Although FIG. **25** illustrates the recesses **110** are disposed at and recessed into the first mold **101,** it would be understood that it is not limited. In some embodiments, the recess **110** is configured to temporarily hold a material. FIG. **26** is a schematic top cross-sectional view of the third injection molding device **300** along a line **CC'** in FIG. **25****.** In some embodiments, the recesses **110** are positioned in a predetermined pattern or are randomly positioned. In some embodiments, the recesses **110** are positioned adjacent to one side (e.g. left side, right side, front portion, rear portion, etc.) of the third injection molding device **300.**

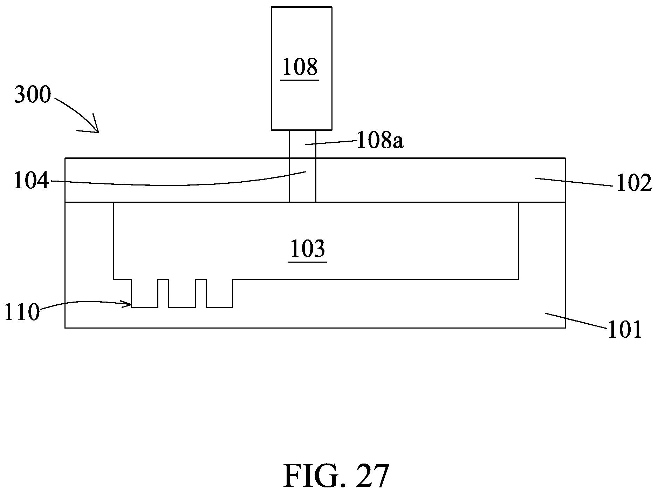

FIG. **27** illustrates the third injection molding device **300** in a closed configuration, that the first mold **101** is engaged with the second mold **102.** In some embodiments, a mold cavity **103** is formed when the third injection molding device **300** is in the closed configuration. In some embodiments, the injector **108** is engaged with the third injection molding device **300** before or after the closing of the third injection molding device **300.** In some embodiments, the outlet **108a** of the injector is engaged with the feeding port **104,** such that the flowable material can flow from the injector **108** into the mold cavity **103** through the outlet **108a** and the feeding port **104.**

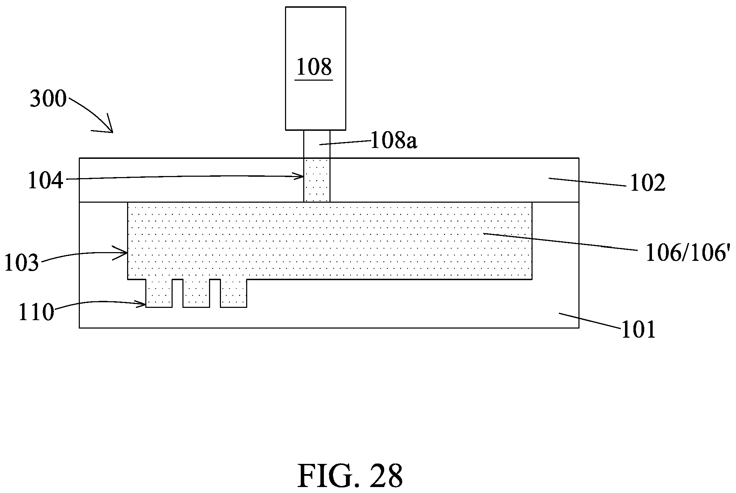

After the engagement of the injector **108,** the flowable material **106'** flows into the mold cavity **103** as shown in FIG. **28****.** In some embodiments, the flowable material **106'** fills the recesses **110.** In some embodiments, the flowable material **106'** is a mixture of a polymeric material (such as polyurethane (PU), thermoplastic polyurethane (TPU), etc.) and a blowing agent (such as physical blowing agent, for example carbon dioxide, nitrogen, supercritical fluid, etc.). The mixture is foamable or slightly foamable. The mixture can undergo a physical foaming process within the mold cavity **103.** The mixture inside the mold cavity **103** becomes a foamed article after the physical foaming process.

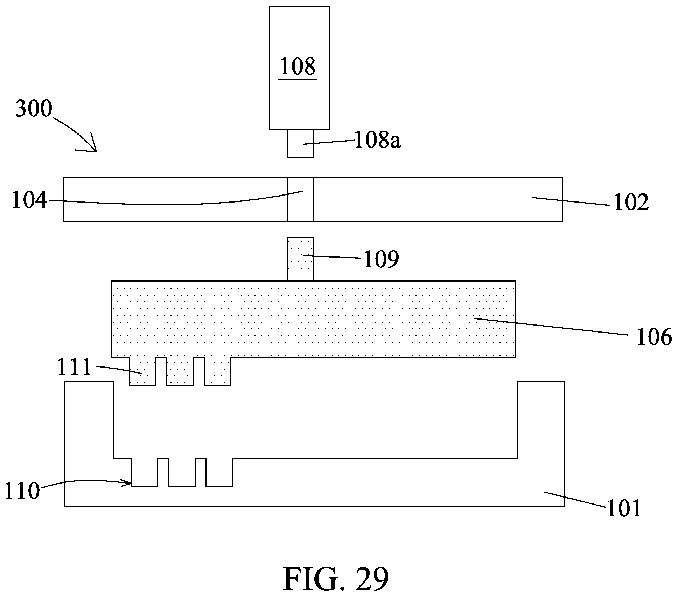

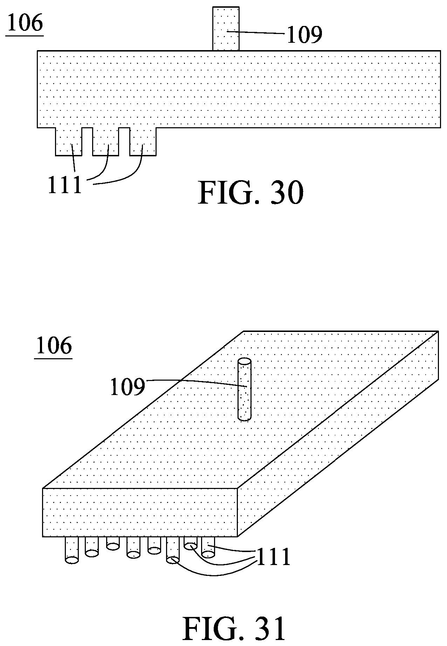

FIG. **29** illustrates an opening of the third injection molding device **300** after the formation of the foamed article **106.** In some embodiments, the outlet **108a** of the injector **108** is disengaged with the feeding port **104** before or after the disengagement of the first mold **101** with the second mold **102.** After the opening of the first injection molding device **100,** the foamed article **106** is taken out from the third injection molding device **300** as shown in FIGS. **29** and **30****.**

FIGS. **30** and **31** illustrate the foamed article **106** formed by the third injection molding device **300.** FIG. 30 is a schematic side view of the foamed article **106,** and FIG. **31** is a schematic perspective view of the foamed article **106.** In some embodiments, the foamed article **106** includes a second protrusion **109** and a third protrusion **111.** In some embodiments, the second protrusion **109** corresponds to and is complementary to at least a portion of the feeding port **104,** and the third protrusion **111** corresponds to and is complementary to at least a portion of the recess **110.**

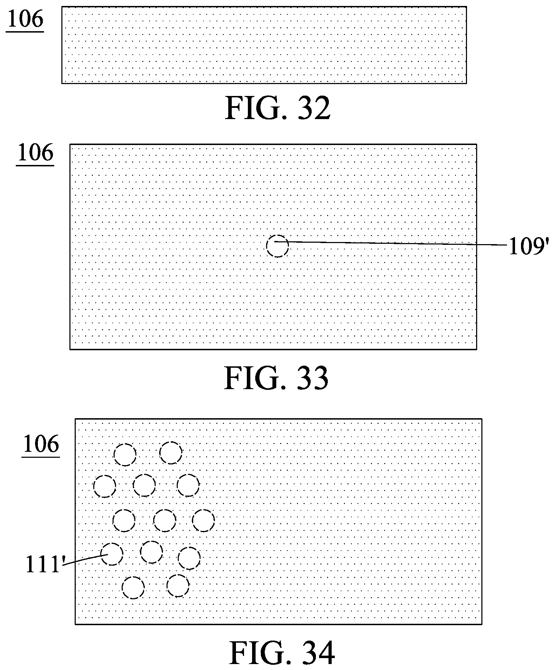

In some embodiments, the second protrusion **109** and the third protrusion **111** are removed as shown in FIGS. **32** to **34.** FIG. **32** is a schematic side view of the foamed article **106,** FIG. **33** is a schematic top view of the foamed article **106,** and FIG. **34** is a schematic bottom view of the foamed article **106.** In some embodiments, the second protrusion **109** and the third protrusion **111** are removed by cutting, trimming, grinding or any other suitable process. As a result, a second trimming trace **109'** is formed on a top surface of the foamed article **106,** and a third trimming trace **111'** is formed on a bottom surface of the foamed article **106.** In some embodiments, the second trimming trace **109'** and the third trimming trace **111'** do not include a skin layer because a skin layer is damaged or removed by the trimming process. In some embodiments, the foamed article **106** is a component of a footwear article, such as an outsole or the like. Since the flowable material **106'** flows into and fills the recesses **110** first and then fills the mold cavity **103,** a flow trace on surfaces of the foamed article **106** is absent or minimized. Further, the flowable material **106'** inside the third injection molding device **300** has undergone a uniform foaming, and as a result pores inside the foamed article **106** are more evenly distributed and an overall density of the foamed article **106** is also more uniform.

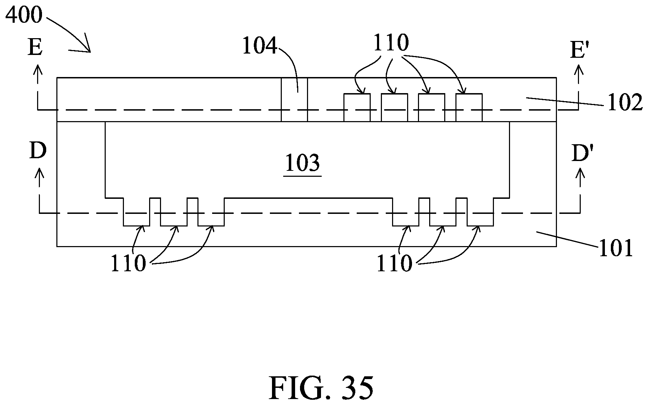

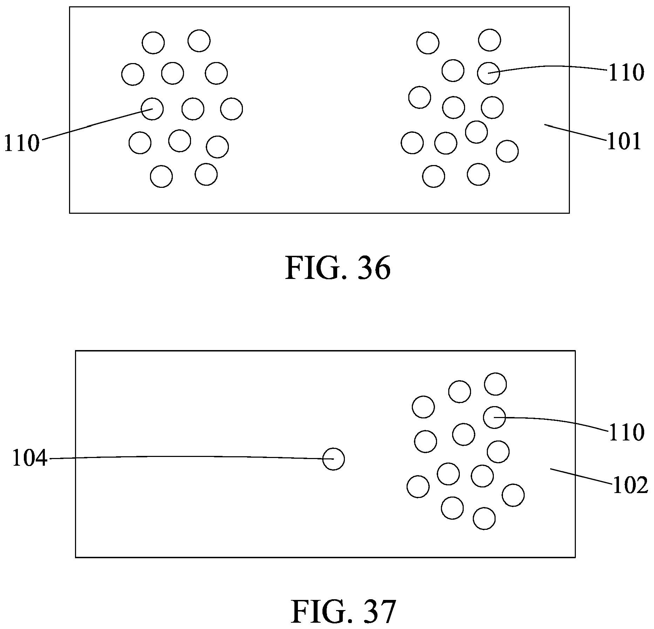

Alternatively, a fourth injection molding device **400** is used as shown in FIGS. **35** to **42****.** In some embodiments, the fourth injection molding device **400** is similar to the third injection molding device **300,** except the recesses **110** are also disposed at the second mold **102.** FIG. **35** is a schematic side view of the fourth injection molding device **400,** FIG. **36** is a schematic top cross-sectional view of the first mold **101** along a line **DD'** in FIG. **35****,** and FIG. **37** is a schematic top cross-sectional view of the second mold **102** along a line **EE'** in FIG. **35****.**

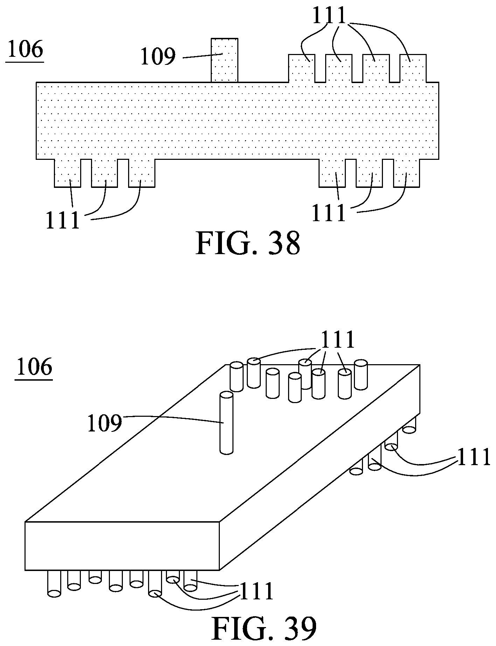

After the flowable material **106'** is flowed into the mold cavity **103** of the fourth injection molding device **400,** the flowable material **106'** undergoes physical foaming to become the foamed article **106** as shown in FIGS. **38** and **39.** FIG. **38** is a schematic side view of the foamed article **106,** and FIG. **39** is a schematic perspective view of the foamed article **106.** In some embodiments, the foamed article **106** includes a second protrusion **109** and third protrusions **111.** In some embodiments, the second protrusion **109** and some of the third protrusions **111** are on a top surface of the foamed article **106.** In some embodiments, some of the third protrusions **111** are on a bottom surface of the foamed article **106.** In some embodiments, some of the third protrusions 111 are on a side surface of the foamed article 106. In some embodiments, a quantity of the third protrusions 111 is different from a quantity of the second production 109. In some embodiments, the quantity of the third protrusions 111 is greater than the quantity of the second production 109. In some embodiments, the quantity of the third protrusions 111 is equal to or less than 3. In some embodiments, the quantity of the third protrusions 111 is equal to 1, 2 or 3.

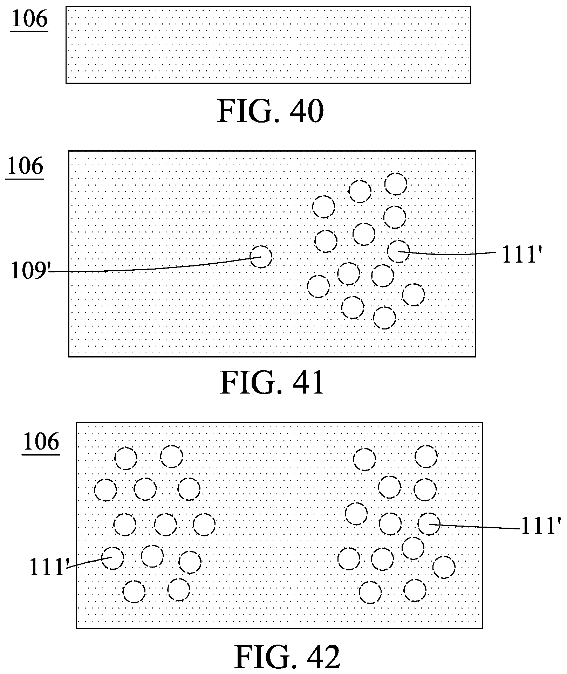

In some embodiments, the second protrusion **109** and the third protrusions **111** are removed as shown in FIGS. **40** to **42.** FIG. **40** is a schematic side view of the foamed article **106,** FIG. **41** is a schematic top view of the foamed article **106,** and FIG. **42** is a schematic bottom view of the foamed article **106.** In some embodiments, the second protrusion **109** and the third protrusions **111** are removed by cutting, trimming, grinding or any other suitable process. As a result, a second trimming trace **109'** is formed on the top surface of the foamed article **106,** and third trimming traces **111'** are formed on the bottom surface of the foamed article **106.** In some embodiments, the third protrusions 111 and the second protrusion 109 are removed to generate the third trimming traces 111' and the second trimming trace 109'. In some embodiments, a surface area of each of the third trimming traces 111' is substantially less than a surface area of the second trimming trace 109'.

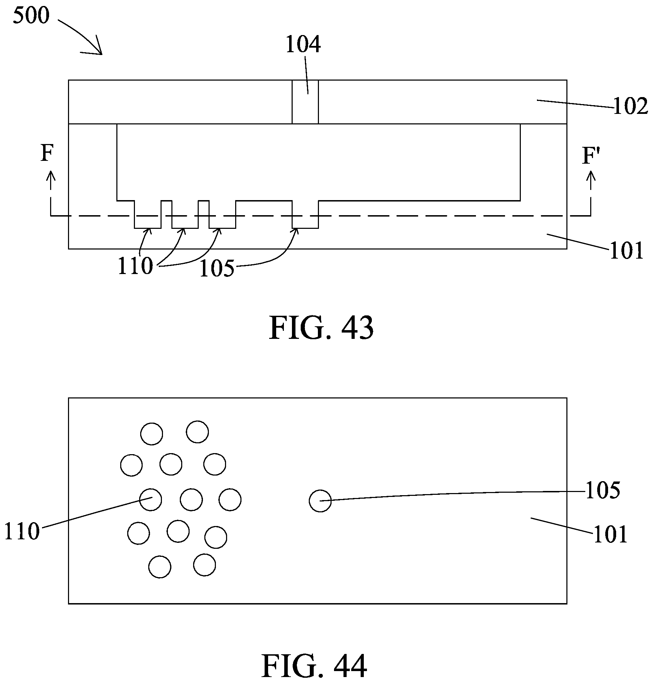

In some embodiments, a fifth injection molding device **500** is used for implementing another injection molding method having several steps as illustrated in FIGS. **43** to **52****.** In some embodiments, the fifth injection molding device **500** is similar to the third injection molding device **300** and the first injection molding device **100,** that the fifth injection molding device **500** is a hybrid of the third injection molding device **300** and the first injection molding device **100.** FIG. **43** is a schematic side view of the fifth injection molding device **500,** and FIG. **44** is a schematic top cross-sectional view of the first mold **101** along a line **FF'** in FIG. **43****.** In some embodiments, the first mold **101** includes a well **105** and several recesses **110,** and the second mold **102** includes a feeding port **104** vertically aligned with the well **105.**

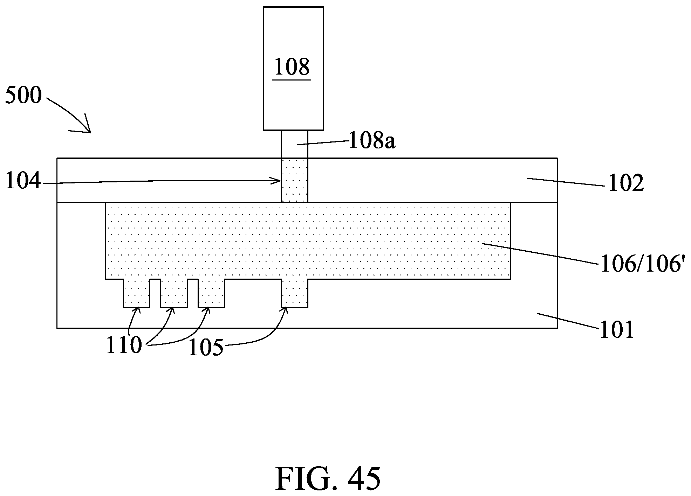

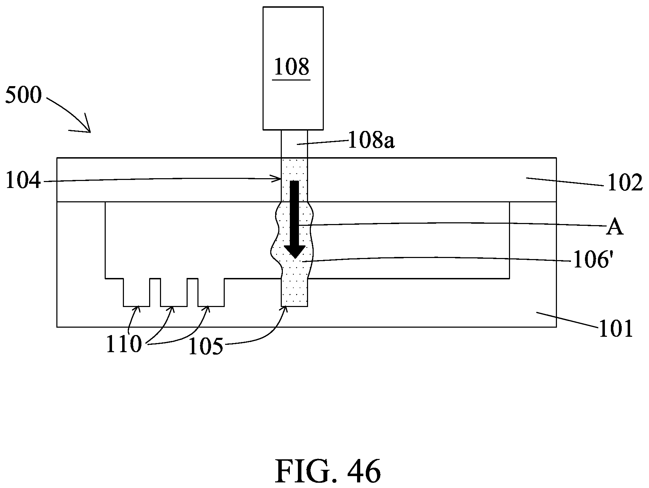

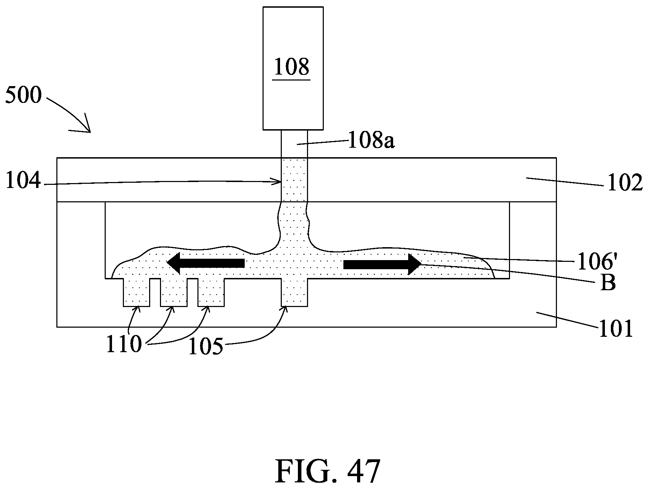

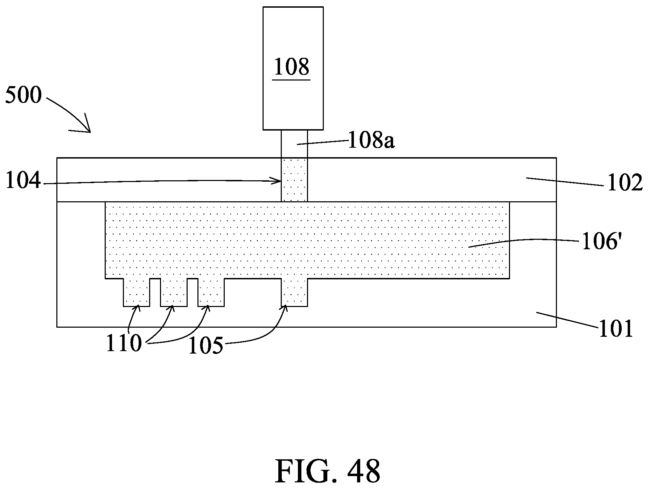

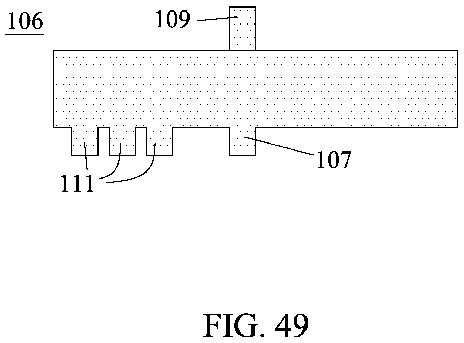

In some embodiments, after the closing of the fifth injection molding device **500** as shown in FIG. **43** and engaging the injector **108** with the fifth injection molding device **500,** a flowable material **106'** is flowed from the injector **108** into the mold cavity **103** as shown in FIG. **45****.** In some embodiments, a flow of the flowable material **106'** is illustrated by FIGS. **46** to **48****.** In some embodiments, when the flowable material **106'** is injected from the outlet **108a** of the injector **108,** the flowable material **106'** flows through the feeding port **104** and the mold cavity **103** toward the well **105** as shown by an arrow **A** in FIG. **46****,** similar to a way described above or illustrated in FIG. **5****.** As such, some of the flowable material **106'** is disposed within the well **105.** The flowable material **106'** is then continued to flow toward two sidewalls of the mold cavity **103** as shown by an arrow **B** in FIG. **47****,** similar to a way described above or illustrated in FIG. **6****.** In some embodiments, the flowable material **106'** ultimately fills the mold cavity **103** as shown in FIG. **48****.** After the injection of the flowable material **106',** the flowable material **106'** undergoes physical foaming inside the mold cavity **103** to become a foamed article **106** as shown in FIGS. **45** and **49.** FIG. **49** is a schematic side view of the foamed article **106.** In some embodiments, the foamed article **106** includes a first protrusion **107,** a second protrusion **109** and third protrusions **111.** In some embodiments, the first protrusion **107** and the third protrusions **111** are disposed on a bottom surface of the foamed article **106,** and the second protrusion **109** is on a top surface of the foamed article **106.**

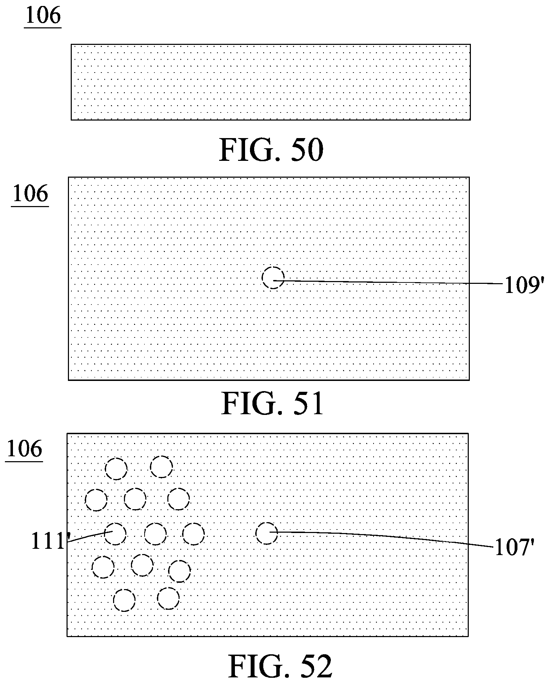

In some embodiments, the first protrusion **107,** the second protrusion **109** and the third protrusions **111** are removed as shown in FIGS. **50** to **52.** FIG. **50** is a schematic side view of the foamed article **106,** FIG. **51** is a schematic top view of the foamed article **106,** and FIG. **52** is a schematic bottom view of the foamed article **106.** In some embodiments, the first protrusion **107,** the second protrusion **109** and the third protrusions **111** are removed by cutting, trimming, grinding or any other suitable process. As a result, a second trimming trace is formed on the top surface of the foamed article **106,** and the first trimming trace **107'** and third trimming traces **111'** are formed on the bottom surface of the foamed article **106.**

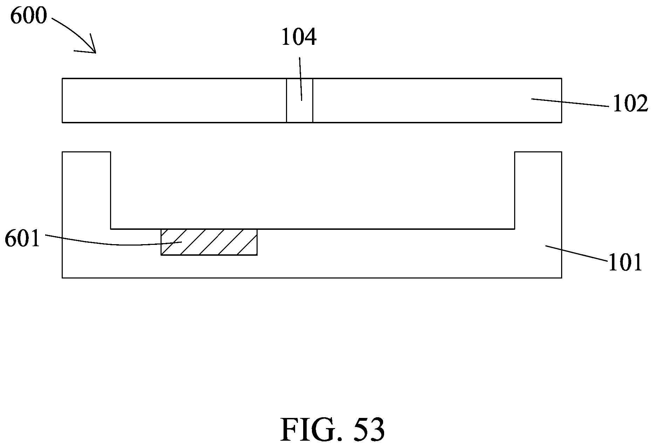

In some embodiments, a sixth injection molding device **600** is used for implementing another injection molding method having several steps as illustrated in FIGS. **53** to **58****.** FIG. **53** illustrates the sixth injection molding device **600** in an open configuration. The sixth injection molding device **600** includes a first mold **101** and a second mold **102** engageable with the first mold **101.** The sixth injection molding device **600** includes a feeding port **104** configured to allow a flowable material passing through. In some embodiments, the feeding port **104** is disposed at the first mold **101** or the second mold **102.** In some embodiments, the sixth injection molding device **600** includes a cooling mechanism **601** disposed at the first mold **101** or the second mold **102.** Although FIG. **53** illustrates the cooling mechanism **601** disposed at first mold **101,** it would be understood that it is not limited. Further, although only one cooling mechanism **601** is disposed in the sixth injection molding device **600,** it would be understood that the quantity of the cooling mechanism **601** is not limited.

In some embodiments, the cooling mechanism **601** is configured to provide a cooling of a portion of a flowable material when the flowable material is disposed on or over the first mold **101.** In some embodiments, the cooling mechanism **601** allows a liquid (such as coolant, water, etc.) flowing through or circulate to cool down a portion of the first mold **101** or a portion of the flowable material disposed on or over the first mold **101.** In some embodiments, the cooling mechanism **601** is an electric cooler, a cooling device or the like.

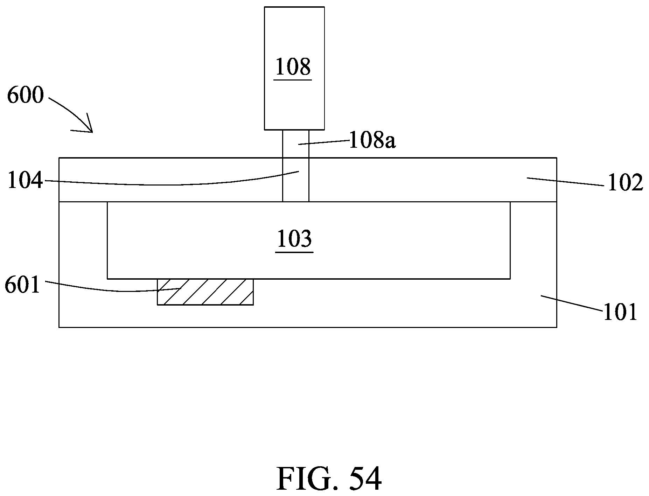

FIG. **54** illustrates the sixth injection molding device **600** in a closed configuration, that the first mold **101** is engaged with the second mold **102.** In some embodiments, a mold cavity **103** is formed when the sixth injection molding device **600** is in the closed configuration. The mold cavity **103** is configured to hold a material. The feeding port **104** is communicable with the mold cavity **103.** In some embodiments, an injector **108** is engaged with the feeding port **104** before or after the engagement of the first mold **101** and the second mold **102.** In some embodiments, an outlet **108a** of the injector **108** is engaged with the feeding port **104** before or after the engagement of the first mold **101** and the second mold **102.** In some embodiments, the injector **108** is configured to inject a flowable material into the mold cavity **103** through the outlet **108a** and the feeding port **104.** In some embodiments, the flowable material is a mixture of a polymeric material (such as polyurethane (PU), thermoplastic polyurethane (TPU), etc.) and a blowing agent (such as physical blowing agent, for example carbon dioxide, nitrogen, supercritical fluid, etc.). The mixture is foamable or slightly foamable. The mixture can undergo a physical foaming process within the mold cavity **103.** The mixture inside the mold cavity **103** becomes a foamed article after the physical foaming process.

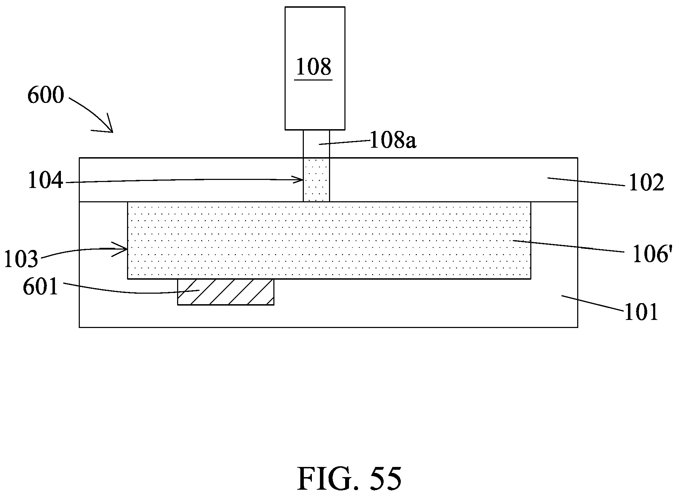

**FIG.55** illustrates a flowable material **106'** is injected into the mold cavity **103** from the injector **108** through the outlet **108a** and the feeding port **104.** In some embodiments, before or upon the injection of the flowable material **106'** into the mold cavity **103,** a temperature of the sixth injection molding device **600** is increased before the injection of the flowable material **106',** and maintained at a first predetermined temperature during the injection of the flowable material **106'** in order to facilitate the flow of the flowable material **106'** into the mold cavity **103.** In some embodiments, the **first predetermined temperature is about 30°C to about 40°C. In some** embodiments, after the injection of the flowable material **106',** the flowable material **106'** inside the mold cavity **103** is at a temperature substantially equal to the first predetermined temperature.

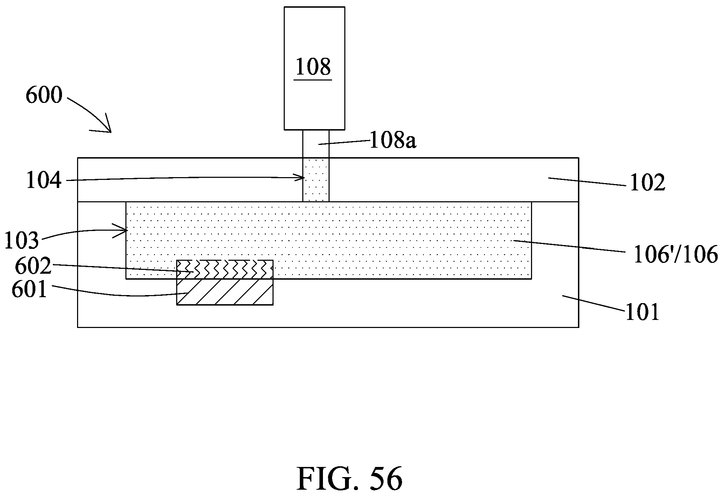

After the injection of the flowable material **106',** the flowable material **106'** undergoes physical foaming inside the mold cavity **103** to become a foamed article **106** as shown in FIG. **56****.** In some embodiments, after the injection of the flowable material **106'** and during the foaming of the flowable material **106'** inside the mold cavity **103,** the cooling mechanism **601** is operated to cool down the flowable material **106'** around the cooling mechanism **601.** In some embodiments, the cooling mechanism **601** is operated to cool down the flowable material **106'** from the first predetermined temperature to a second predetermined temperature. In some embodiments, the second predetermined temperature is substantially less than 25°C. In some embodiments, the second predetermined temperature is about 20°C. In some embodiments, a duration for cooling the flowable material **106'** around the cooling mechanism **601** from the first predetermined temperature to the second predetermined temperature by the cooling mechanism **601** is substantially less than 2 seconds.

After the cooling of the flowable material **106'** by the cooling mechanism **601** and after the foaming of the flowable material **106',** a foamed article **106** having a skin layer **602** is formed. The skin layer **602** is formed from the flowable material **106'** around the cooling mechanism **601.** In some embodiments, the skin layer **602** has a thickness of about 0.5 mm to about 5 mm. In some embodiments, a density gradient is present within the skin layer **602,** that a density of the skin layer **602** is gradually increased from an interior of the foamed article **106** to an exterior of the foamed article **106.** In some embodiments, the skin layer **602** has lesser degree of physical foaming than the rest portion of the foamed article **106.** That is, the rest portion of the foamed article **106** has higher degree of physical foaming than the skin layer **602.** In some embodiments, a density of the skin layer **602** is different from a density of the rest portion of the foamed article **106.** In some embodiments, the density of the skin layer **602** is substantially greater than the density of the rest portion of the foamed article **106.** In some embodiments, the density of the skin layer **602** is substantially equal to or more than 0.2 g/cm³, and the density of the rest portion of the foamed article **106** is substantially less than 0.2 g/cm³. In some embodiments, the density of the skin layer **602** is substantially equal to or more than 0.22 g/cm³, and the density of the rest portion of the foamed article **106** is substantially equal to or less than 0.16 g/cm³. In some embodiments, the skin layer **602** has higher abrasion resistance than the rest portion of the foamed article **106,** because the density of the skin layer **602** is higher than the density of the rest portion of the foamed article **106.**

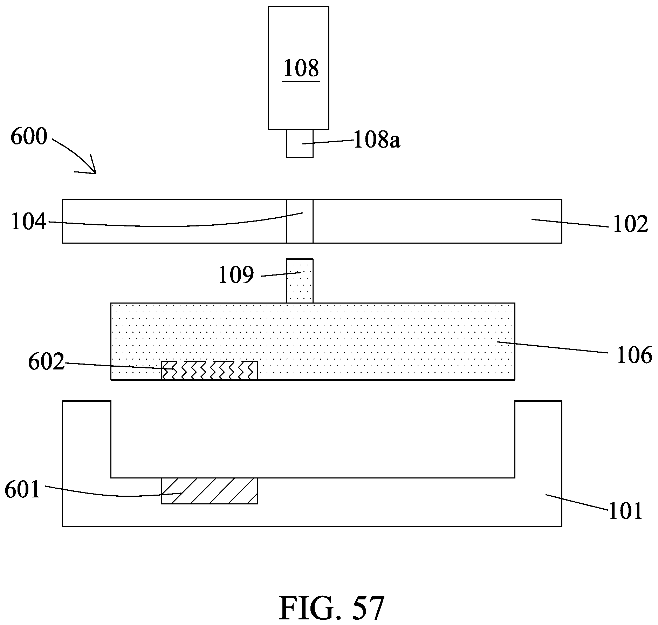

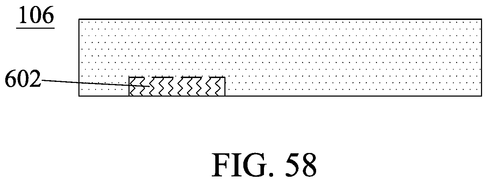

FIG. **57** illustrates an opening of the sixth injection molding device 600 after the formation of the foamed article **106** having the skin layer **602.** In some embodiments, the outlet **108a** of the injector **108** is disengaged with the feeding port **104** before or after the disengagement of the first mold **101** with the second mold **102.** After the opening of the sixth injection molding device **600,** the foamed article **106** having the skin layer **602** is taken out from the sixth injection molding device **600** as shown in FIG. **57****.** In some embodiments, the second protrusion **109** is removed by cutting, trimming, grinding or any other suitable process, as shown in FIG. **58****.**

In some embodiments, the foamed article **106** is a component of a footwear article, such as an outsole or the like. In some embodiments, the skin layer **602** is exposed to the surroundings, that no adhesive or no other component covers the skin layer **602.**

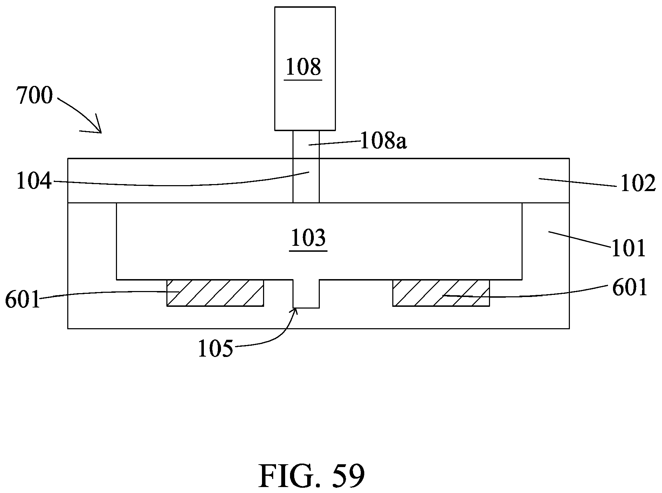

In some embodiments, a seventh injection molding device **700** is used for implementing another injection molding method having several steps as illustrated in FIGS. **59** to **66****.** In some embodiments, the seventh injection molding device **700** is similar to first injection molding device **100** and the sixth injection molding device **600,** that the seventh injection molding device **700** is a hybrid of the first injection molding device **100** and the sixth injection molding device **600.** FIG. **59** is a schematic side view of the seventh injection molding device **700** in a closed configuration. In some embodiments, the first mold **101** includes a well **105** and a cooling mechanism **601,** and the second mold **102** includes a feeding port **104** vertically aligned with the well **105.**

In some embodiments, before or upon the injection of the flowable material **106'** into the mold cavity **103,** a temperature of the seventh injection molding device **700** is increased before the injection of the flowable material **106',** and maintained at a first predetermined temperature during the injection of the flowable material **106'** in order to facilitate the flow of the flowable material **106'** into the mold cavity **103.** In some **embodiments, the first predetermined temperature is about 30°C to about 40°C. In some** embodiments, after the injection of the flowable material **106',** the flowable material **106'** inside the mold cavity **103** is at a temperature substantially equal to the first predetermined temperature.

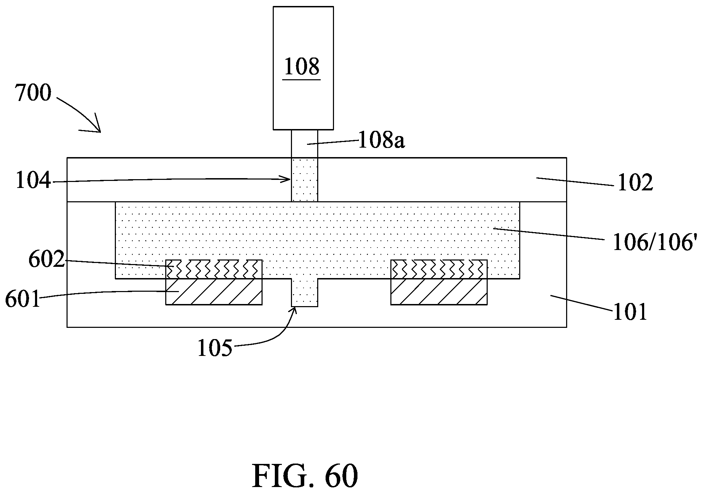

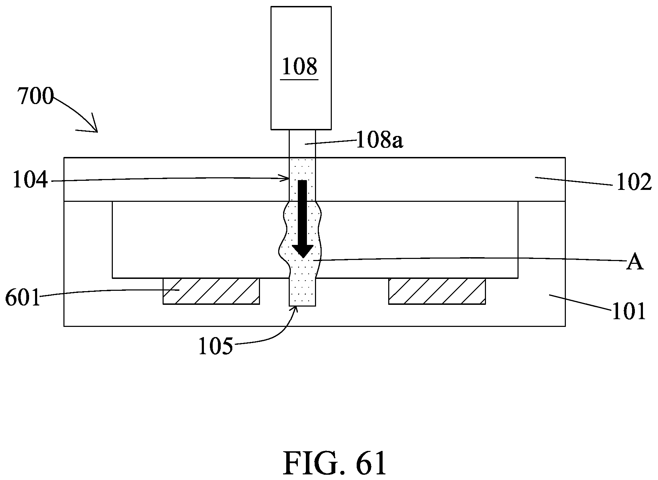

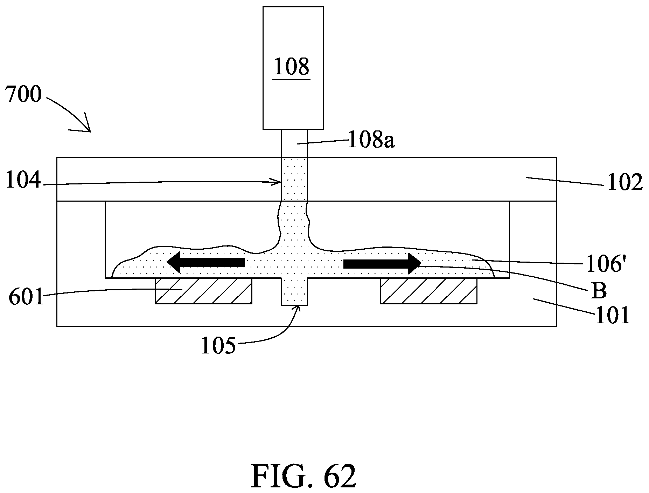

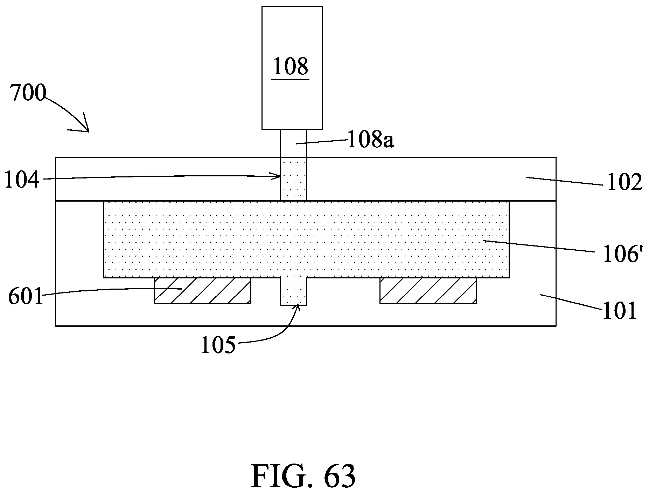

In some embodiments, after the closing of the seventh injection molding device **700** as shown in FIG. **59** and engaging the injector **108** with the seventh injection molding device **700,** a flowable material **106'** is flowed from the injector **108** into the mold cavity **103** as shown in FIG. **60****.** In some embodiments, a flow of the flowable material **106'** is illustrated by FIGS. **61** to **63****.** In some embodiments, when the flowable material **106'** is injected from the outlet **108a** of the injector **108,** the flowable material **106'** flows through the feeding port **104** and the mold cavity **103** toward the well **105** as shown by an arrow **A** in FIG. **61****,** similar to a way described above or illustrated in FIG. **5****.** As such, some of the flowable material **106'** is disposed within the well **105.** The flowable material **106'** is then continued to flow toward two sidewalls of the mold cavity **103** as shown by an arrow **B** in FIG. **62****,** similar to a way described above or illustrated in FIG. **6****.** In some embodiments, the flowable material **106'** ultimately fills the mold cavity **103** as shown in FIG. **63****.**

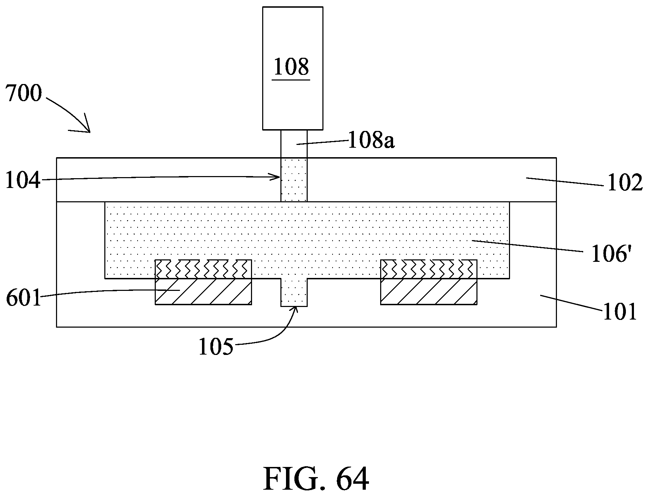

In some embodiments, after the injection of the flowable material 106' and during the foaming of the flowable material **106'** inside the mold cavity **103,** the cooling mechanism **601** is operated as shown in FIG. 64. The cooling mechanism **601** is operated to cool down the flowable material **106'** around the cooling mechanism **601.** In some embodiments, the cooling mechanism **601** is operated to cool down the flowable material **106'** from the first predetermined temperature to a second predetermined temperature. In **some embodiments, the second predetermined temperature is substantially less than 25°C.** In **some embodiments, the second predetermined temperature is about 20°C. In some** embodiments, a duration for cooling the flowable material **106'** around the cooling mechanism **601** from the first predetermined temperature to the second predetermined temperature by the cooling mechanism **601** is substantially less than 2 seconds.

After the foaming and the cooling of the flowable material **106',** a foamed article **106** with a skin layer **602** is formed as shown in FIG. **60****.** The skin layer **602** is formed from the flowable material **106'** around the cooling mechanism **601.** In some embodiments, the skin layer **602** has a thickness of about 0.5 mm to about 5 mm. In some embodiments, a density gradient is present within the skin layer **602,** that a density of the skin layer **602** is gradually increased from an interior of the foamed article **106** to an exterior of the foamed article **106.** In some embodiments, the skin layer **602** has lesser degree of physical foaming than the rest portion of the foamed article **106.** That is, the rest portion of the foamed article **106** has higher degree of physical foaming than the skin layer **602.** In some embodiments, a density of the skin layer **602** is different from a density of the rest portion of the foamed article **106.** In some embodiments, the density of the skin layer **602** is substantially greater than the density of the rest portion of the foamed article **106.** In some embodiments, the density of the skin layer **602** is substantially equal to or more than 0.2 g/cm³, and the density of the rest portion of the foamed article **106** is substantially less than 0.2 g/cm³. In some embodiments, the density of the skin layer **602** is substantially equal to or more than 0.22 g/cm³, and the density of the rest portion of the foamed article **106** is substantially equal to or less than 0.16 g/cm³. In some embodiments, the skin layer **602** has higher abrasion resistance than the rest portion of the foamed article **106,** because the density of the skin layer **602** is higher than the density of the rest portion of the foamed article **106.**

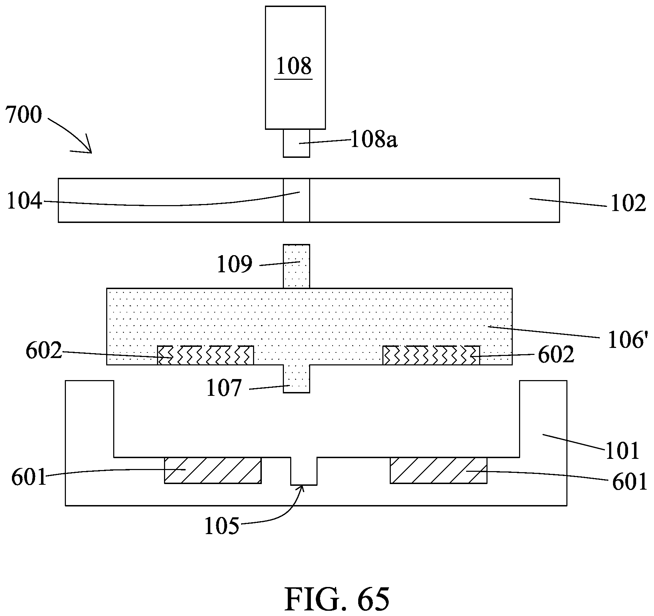

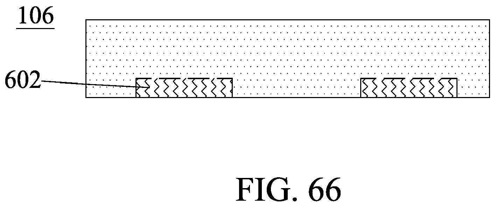

FIG. **65** illustrates an opening of the seventh injection molding device **700** after the formation of the foamed article **106** having the skin layer **602.** In some embodiments, the outlet **108a** of the injector **108** is disengaged with the feeding port **104** before or after the disengagement of the first mold **101** with the second mold **102.** After the opening of the seventh injection molding device **700,** the foamed article **106** having the skin layer **602** is taken out from the seventh injection molding device **700** as shown in FIG. **65****.** In some embodiments, the first protrusion **107** and the second protrusion **109** are removed by cutting, trimming, grinding or any other suitable process, as shown in FIG. 66. In some embodiments, the foamed article **106** is a component of a footwear article, such as an outsole or the like. In some embodiments, the skin layer **602** is exposed to the surroundings, that no adhesive or no other component covers the skin layer **602.**

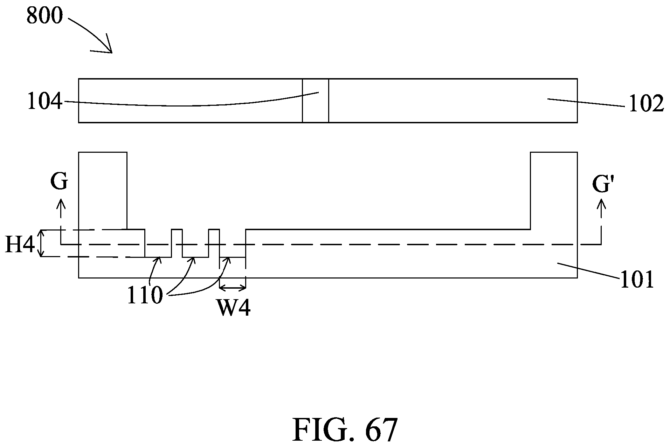

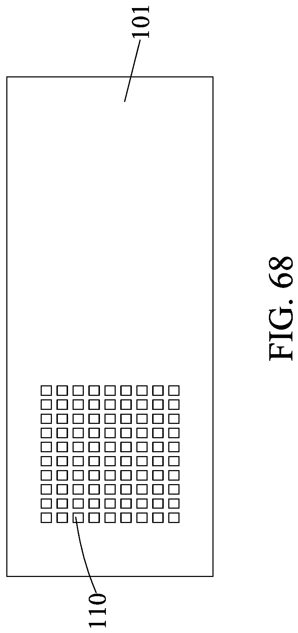

In some embodiments, an eighth injection molding device **800** is used for implementing another injection molding method having several steps as illustrated in FIGS. **67** to **76****.** FIG. **67** illustrates the eighth injection molding device **800** in an open configuration. In some embodiments, the eighth injection molding device **800** includes the first mold **101,** the second mold **102** and the feeding port **104,** which are similar to those in the first or second injection molding devices **100** or **200.** FIG. **67** shows one feeding port **104** only, but it would be understood that more than one feeding port **104** can be included. In some embodiments, the eighth injection molding device **800** includes several recesses **110** indented into the first mold **101** or the second mold **102.** Although FIG. **67** illustrates the recesses **110** are disposed at and recessed into the first mold **101,** it would be understood that it is not limited. In some embodiments, the recess **110** is configured to temporarily hold a material. FIG. **68** is a schematic top cross-sectional view of the eighth injection molding device **800** along a line **GG'** in FIG. **67****.** In some embodiments, the recesses **110** are positioned in a predetermined pattern, for example, the recesses **110** are arranged in a matrix. In some embodiments, the recesses **110** are positioned adjacent to one side (e.g. left side, right side, front portion, rear portion, etc.) of the eighth injection molding device **800.** In some embodiments, the recesses **110** are laterally offset from a sidewall of the first mold **101** about 0.8 to 1.6 centimeter. In some embodiments, the recess **110** has a height **H4** of about 0.3 millimeter and has a width W4 of about 0.3 millimeter.

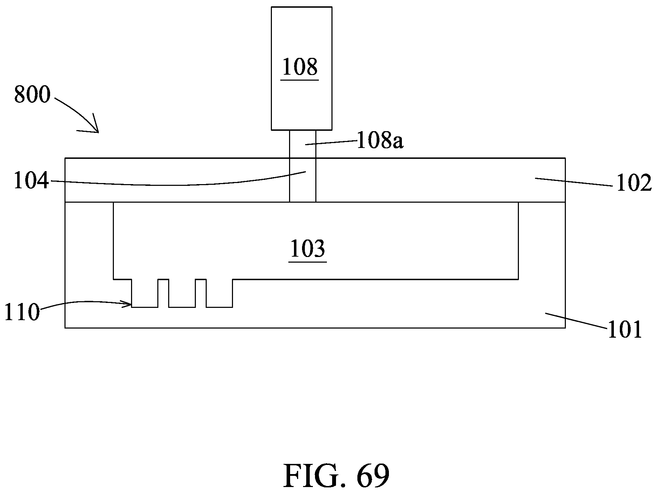

FIG. **69** illustrates the eighth injection molding device **800** in a closed configuration, that the first mold **101** is engaged with the second mold **102.** In some embodiments, a mold cavity **103** is formed when the eighth injection molding device **800** is in the closed configuration. In some embodiments, the injector **108** is engaged with the eighth injection molding device **800** before or after the closing of the eighth injection molding device **800.** In some embodiments, the outlet **108a** of the injector is engaged with the feeding port **104,** such that the flowable material can flow from the injector **108** into the mold cavity **103** through the outlet **108a** and the feeding port **104.**

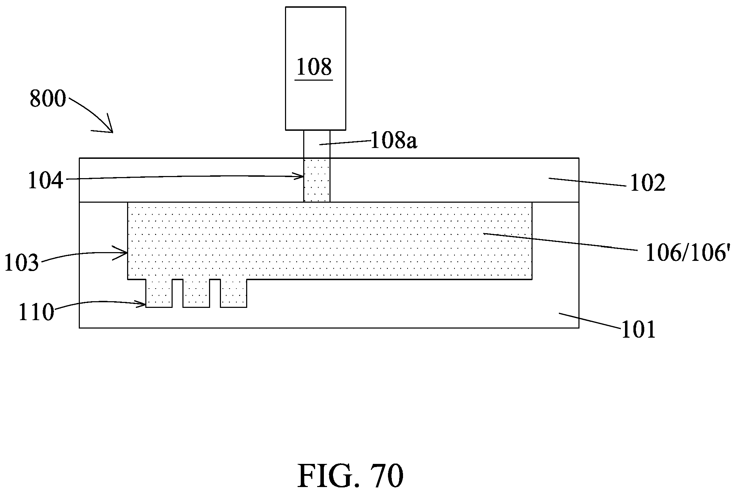

After the engagement of the injector **108,** the flowable material **106'** flows into the mold cavity **103** as shown in FIG. **70****.** In some embodiments, the flowable material **106'** fills the recesses **110.** In some embodiments, the flowable material **106'** is a mixture of a polymeric material (such as polyurethane (PU), thermoplastic polyurethane (TPU), etc.) and a blowing agent (such as physical blowing agent, for example carbon dioxide, nitrogen, supercritical fluid, etc.). The mixture is foamable or slightly foamable. The mixture can undergo a physical foaming process within the mold cavity **103.** The mixture inside the mold cavity **103** becomes a foamed article after the physical foaming process. In some embodiments, when the flowable material **106'** is injected from the outlet **108a** of the injector **108,** the flowable material **106'** flows through the feeding port **104** and the mold cavity **103.** In some embodiments, during the flowing of the flowable material **106',** the recesses **110** disturb the flowing of the polymer to break air bubble under the skin layer (inside the product), as a result a contact surface (corresponding to the recesses **110**) of the product is improved. In comparative example, an additional rubbing or grinding step is used to make the contact surface smooth, but this rubbing or grinding step may not be necessary for the injection molding method of the present disclosure due to the recesses **110.**

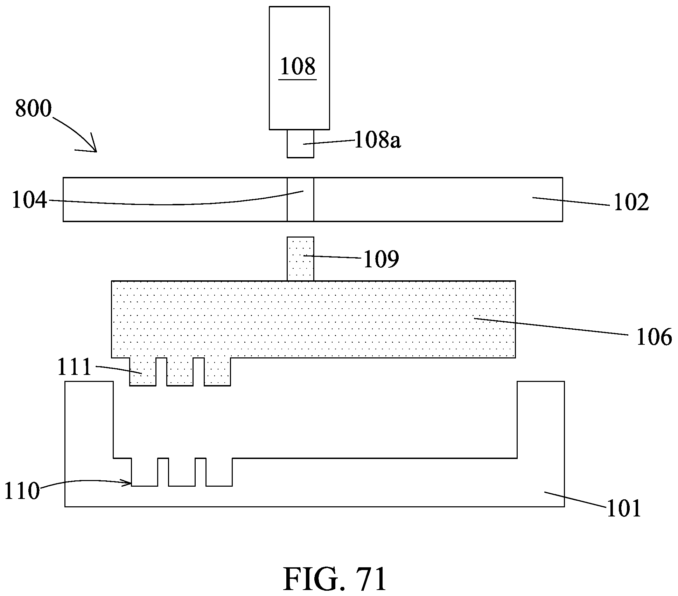

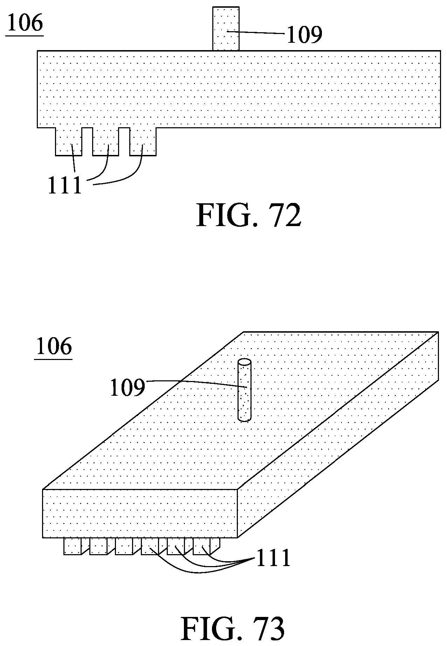

FIG. **71** illustrates an opening of the eighth injection molding device **800** after the formation of the foamed article **106.** In some embodiments, the outlet **108a** of the injector **108** is disengaged with the feeding port **104** before or after the disengagement of the first mold **101** with the second mold **102.** After the opening of the first injection molding device **100,** the foamed article **106** is taken out from the eighth injection molding device **800** as shown in FIGS. **71** and **72****.**

FIGS. **72** and **73** illustrate the foamed article **106** formed by the eighth injection molding device **800.** FIG. **72** is a schematic side view of the foamed article **106,** and FIG. **73** is a schematic perspective view of the foamed article **106.** In some embodiments, the foamed article **106** includes a second protrusion **109** and a third protrusion **111.** In some embodiments, the second protrusion **109** corresponds to and is complementary to at least a portion of the feeding port **104,** and the third protrusion **111** corresponds to and is complementary to at least a portion of the recess **110.**

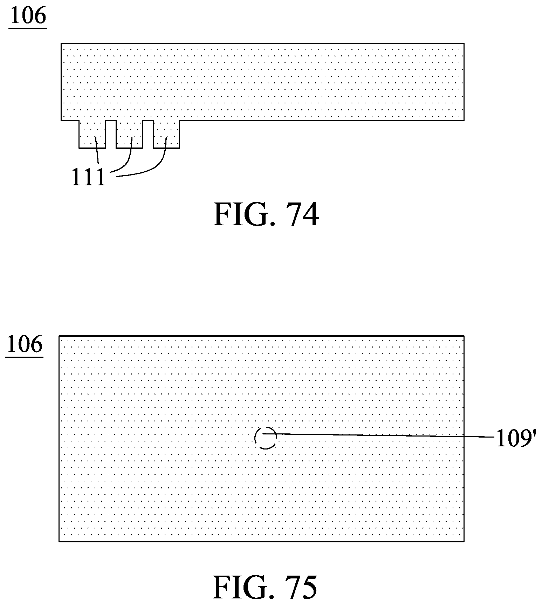

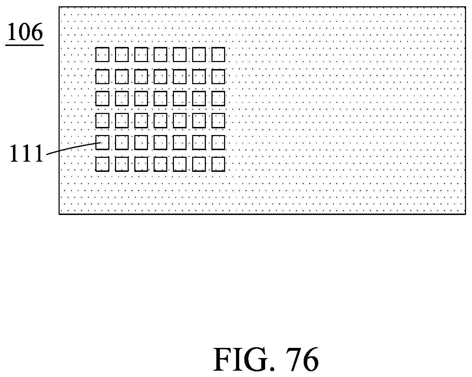

In some embodiments, the second protrusion **109** is removed as shown in FIGS. **74** to **76****.** FIG. **74** is a schematic side view of the foamed article **106,** FIG. **75** is a schematic top view of the foamed article **106,** and FIG. **76** is a schematic bottom view of the foamed article **106.** In some embodiments, the second protrusion **109** is removed by cutting, trimming, grinding or any other suitable process. As a result, a second trimming trace **109'** is formed on a top surface of the foamed article **106.** In some embodiments, the second trimming trace **109'** does not include a skin layer because a skin layer is damaged or removed by the trimming process. In some embodiments, the foamed article **106** is a component of a footwear article, such as an outsole or the like. Since the flowable material **106'** flows into and fills the recesses **110** first and then fills the mold cavity **103,** a flow trace on surfaces of the foamed article **106** is absent or minimized. Further, the flowable material **106'** inside the eighth injection molding device **800** has undergone a uniform foaming, and as a result pores inside the foamed article **106** are more evenly distributed and an overall density of the foamed article **106** is also more uniform.

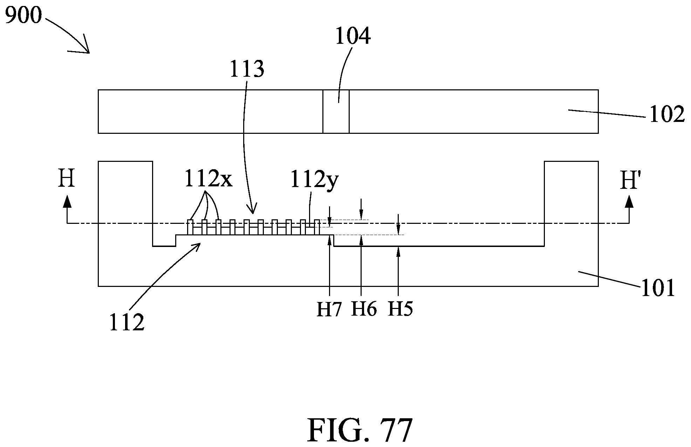

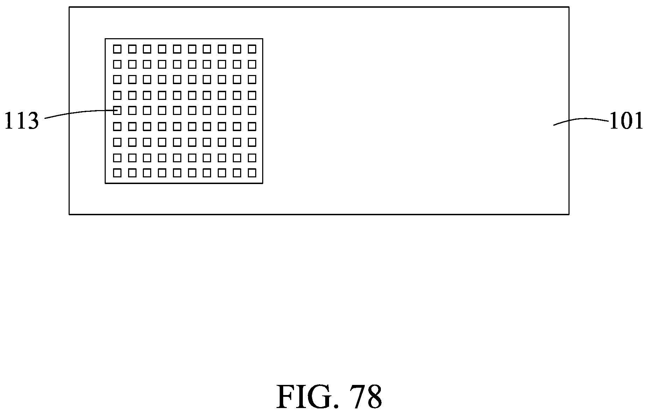

In some embodiments, a ninth injection molding device **900** is used for implementing another injection molding method having several steps as illustrated in FIGS. **77** to **85****.** FIG. **77** illustrates the ninth injection molding device **900** in an open configuration. In some embodiments, the ninth injection molding device **900** includes the first mold **101,** the second mold **102** and the feeding port **104,** which are similar to those in the first or second injection molding devices **100** or **200.** FIG. **77** shows one feeding port **104** only, but it would be understood that more than one feeding port **104** can be included. In some embodiments, the ninth injection molding device **900** includes a protrusion **112** protruding from the first mold **101** or the second mold **102.** Although FIG. **77** illustrates the protrusion **112** is disposed at and protruded the first mold **101,** it would be understood that it is not limited. In some embodiments, the protrusion **112** is configured to temporarily disturb the flow of a material with the horizontal protrusions **112x** and the vertical protrusions **112y,** and temporarily hold the material within the recesses **113.** FIG. **78** is a schematic top cross-sectional view of the ninth injection molding device **900** along a line **HH'** in FIG. **77****.** In some embodiments, the protrusion **112** is formed in a predetermined pattern, for example, the protrusion **112** is formed as a matrix. In some embodiments, the protrusion **112** is positioned adjacent to one side (e.g. left side, right side, front portion, rear portion, etc.) of the ninth injection molding device **900.** In some embodiments, the protrusion **112** is laterally offset from a sidewall of the first mold **101** about 0.8 to 1.6 centimeter. In some embodiments, a base of the protrusion **112** has height **H5** about 0.3 millimeter, the horizontal protrusions **112x** on the base of the protrusion **112** has a height **H6** about 0.3 millimeter, and the vertical protrusions **112y** on the base of the protrusion **112** has a height **H7** about 0.15 millimeter.

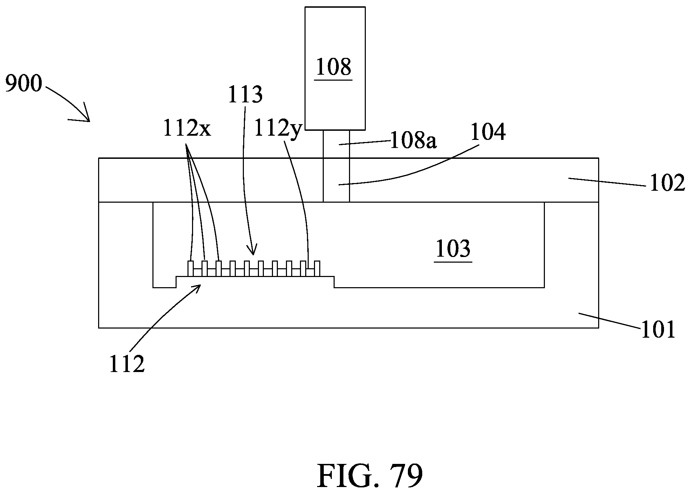

FIG. **79** illustrates the ninth injection molding device **900** in a closed configuration, that the first mold **101** is engaged with the second mold **102.** In some embodiments, a mold cavity **103** is formed when the ninth injection molding device **900** is in the closed configuration. In some embodiments, the injector **108** is engaged with the ninth injection molding device **900** before or after the closing of the ninth injection molding device **900.** In some embodiments, the outlet **108a** of the injector is engaged with the feeding port **104,** such that the flowable material can flow from the injector **108** into the mold cavity **103** through the outlet **108a** and the feeding port **104.**

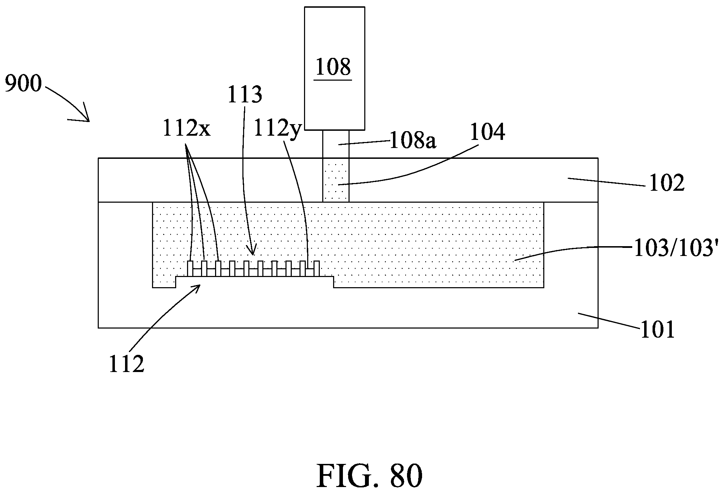

After the engagement of the injector **108,** the flowable material **106'** flows into the mold cavity **103** as shown in FIG. **80****.** In some embodiments, the flowable material **106'** fills the recesses **113.** In some embodiments, the flowable material **106'** is a mixture of a polymeric material (such as polyurethane (PU), thermoplastic polyurethane (TPU), etc.) and a blowing agent (such as physical blowing agent, for example carbon dioxide, nitrogen, supercritical fluid, etc.). The mixture is foamable or slightly foamable. The mixture can undergo a physical foaming process within the mold cavity **103.** The mixture inside the mold cavity **103** becomes a foamed article after the physical foaming process. In some embodiments, when the flowable material **106'** is injected from the outlet **108a** of the injector **108,** the flowable material **106'** flows through the feeding port **104** and the mold cavity **103.** In some embodiments, during the flowing of the flowable material **106',** the protrusion **112** and the recesses **113** disturb the flowing of the polymer to break air bubble under the skin layer (inside the product), as a result a contact surface (corresponding to the protrusion **112** and the recesses **113**) of the product is improved. In comparative example, an additional rubbing or grinding step is used to make the contact surface smooth, but this rubbing or grinding step may not be necessary for the injection molding method of the present disclosure due to the protrusion **112** and the recesses **113.**

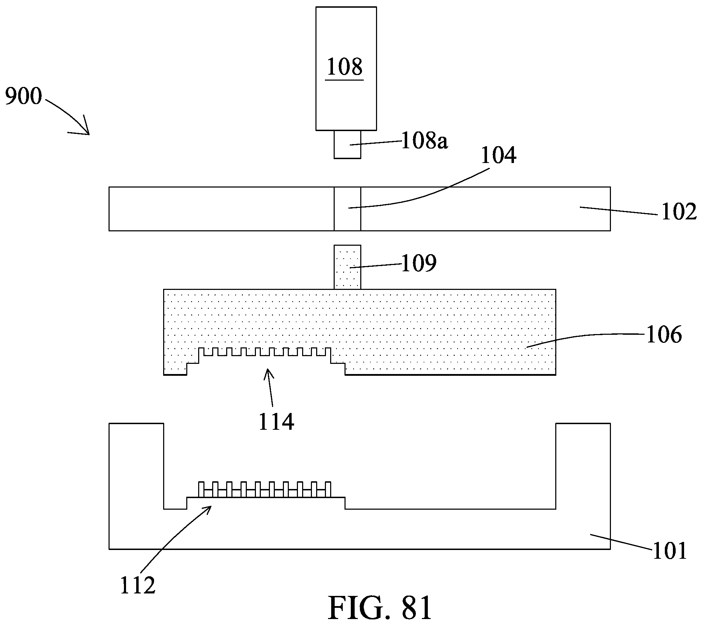

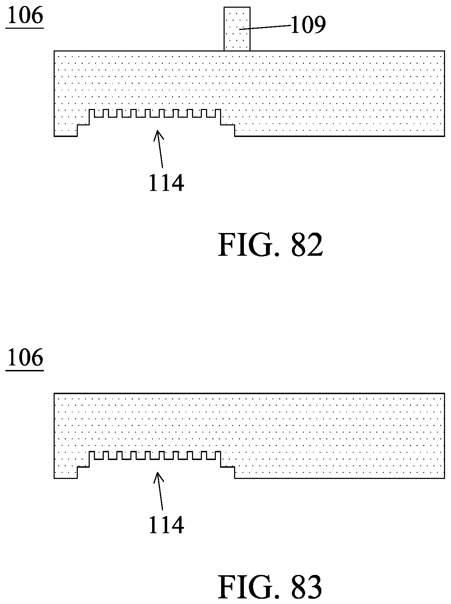

FIG. **81** illustrates an opening of the ninth injection molding device **900** after the formation of the foamed article **106.** In some embodiments, the outlet **108a** of the injector **108** is disengaged with the feeding port **104** before or after the disengagement of the first mold **101** with the second mold **102.** After the opening of the first injection molding device **100,** the foamed article **106** is taken out from the ninth injection molding device **900** as shown in FIGS. **81** and **82****.**

FIGS. **82** and **83** illustrate the foamed article **106** formed by the ninth injection molding device **900.** FIG. **82** is a schematic side view of the foamed article **106,** and FIG. **83** is a schematic perspective view of the foamed article **106.** In some embodiments, the foamed article **106** includes a second protrusion **109** and a recess **114.** In some embodiments, the second protrusion **109** corresponds to and is complementary to at least a portion of the feeding port **104,** and the recess **114** corresponds to and is complementary to at least a portion of the protrusion **112.**

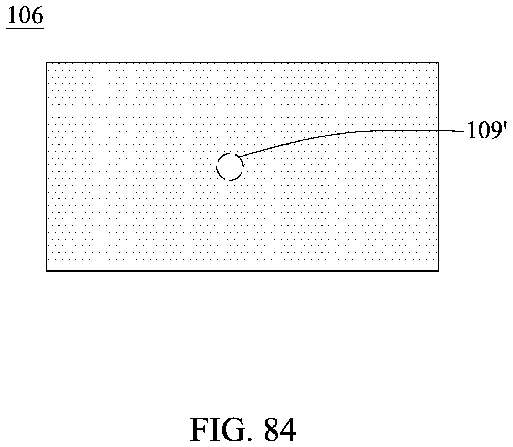

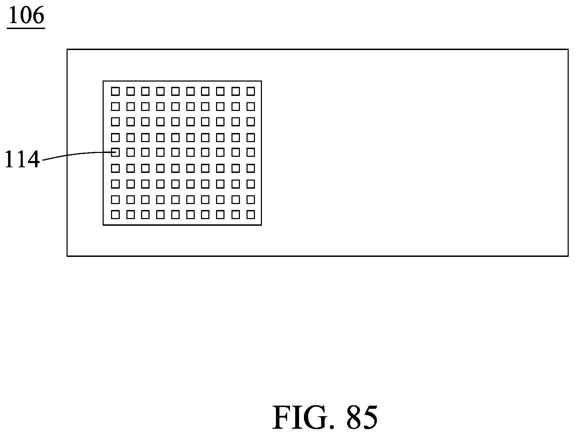

In some embodiments, the second protrusion **109** is removed as shown in FIGS. **84** to **85****.** FIG. **84** is a schematic top view of the foamed article **106,** and FIG. **85** is a schematic bottom view of the foamed article **106.** In some embodiments, the second protrusion **109** is removed by cutting, trimming, grinding or any other suitable process. As a result, a second trimming trace **109'** is formed on a top surface of the foamed article **106.** In some embodiments, the second trimming trace **109'** does not include a skin layer because a skin layer is damaged or removed by the trimming process. In some embodiments, the foamed article **106** is a component of a footwear article, such as an outsole or the like. Since the flowable material **106'** flows into and fills the recesses **113** to form the recesses **114** first, and then fills the mold cavity **103,** a flow trace on surfaces of the foamed article **106** is absent or minimized. Further, the flowable material **106'** inside the ninth injection molding device **900** has undergone a uniform foaming, and as a result pores inside the foamed article **106** are more evenly distributed and an overall density of the foamed article **106** is also more uniform.

## Claims

1. A molding method, comprising:
providing a molding device (100) including a first mold (101) and a second mold (102), wherein the first mold (101) includes a recess (110) recessed into the first mold, and the second mold (102) includes a feeding port (104) extending through the second mold (102);
engaging the first mold (101) with the second mold (102) to form a mold cavity (103) defined by the first mold (101) and the second mold (102), wherein the mold cavity (103) is communicable with the recess (110) and the feeding port (104);
injecting a flowable material (106') into the mold cavity (103) through the feeding port (104) to fill the recess (110) and the mold cavity (103); and
foaming the flowable material (106') to a foamed article (106).

2. The method of claim 1, wherein the feeding port (104) is aligned with the recess (105).

3. The method of claim 1, wherein the foamed article (106) includes a first protrusion (107) within the recess (105).

4. The method of claim 3, further comprising:
taking the foamed article (106) out of the molding device (100);
removing the first protrusion (107) from the foamed article (106),
wherein a first trimming trace (107') is formed on the foamed article (106) corresponding to the first protrusion (107) after the removal.

5. The method of claim 4, wherein the foamed article (106) includes a second protrusion (109) within the feeding port (104), and the method further comprising:
removing the second protrusion (109) from the foamed article (106),
wherein a second trimming trace (109') is formed on the foamed article (106) corresponding to the second protrusion (109) after the removal.

6. A molding method, comprising:
providing a molding device (100) including a first mold (101) and a second mold (102), wherein the first mold (101) or the second mold (102) includes a cooling mechanism (601) embedded in the first mold (101), and the second mold (102) includes a feeding port (104) extending through the second mold (102);
engaging the first mold (101) with the second mold (102) to form a mold cavity (103) defined by the first mold (101) and the second mold (102);
injecting a flowable material (106') into the mold cavity (103) through the feeding port (104);
operating the cooling mechanism (601) to cool down the flowable material (106') around the cooling mechanism (601); and
foaming the flowable material (106') to a foamed article (106).

7. The method of claim 6, wherein the foamed article (106) has a skin layer (602) adjacent to the cooling mechanism (601), and the skin layer (602) has a density gradient gradually increased from an interior of the foamed article (106) to an exterior of the foamed article (106).

8. The method of claim 6, wherein a density of the skin layer (602) is substantially greater than a density of a rest portion of the foamed article (106).

9. The method of claim 6, wherein the method further comprising:
adjusting the molding device (100) to a first predetermined temperature before the injection of the flowable material (106');
maintaining the molding device (100) at the first predetermined temperature during the injection of the flowable material (106'),
wherein the operation of the cooling mechanism (601) includes cooling the flowable material (106') around the cooling mechanism (602) from the first predetermined temperature to a second predetermined temperature substantially lower than the first predetermined temperature.

10. The method of claim 9, wherein a difference between the first predetermined temperature and the second predetermined temperature is substantially greater than 10°C.

11. The method of claim 7, wherein the first mold (101) includes a recess (105) recessed into the first mold (101) and coupled with the mold cavity (103), the flowable material (106') is flowed into the recess (105) during the injecting the flowable material (106') into the mold cavity (103), and the foamed article (106) includes a first protrusion (107) within the recess (105).

12. The method of claim 11, wherein a density of the skin layer (602) is substantially greater than a density of the first protrusion (107).

13. A foamed article, comprising:
a first surface, a second surface opposite to the first surface, and a third surface between the first surface and the second surface;
a first trace (107') disposed on the first surface, and
a second trace (109') disposed on the second surface, opposite to the first trace and vertically aligned with the first trace.

14. The foamed article of claim 13, furthering comprising:
a third trace (111') disposed on the first surface, the second surface or the third surface, wherein a surface area of the third trace (111') is substantially smaller than a surface area of the second trace (109').

15. The foamed article of claim 13, furthering comprising:
a skin layer (602) exposed through the first surface, the second surface or the third surface,
wherein an abrasion resistance of the skin layer (602) is greater than a rest portion of the foamed article (106), and the skin layer (602) has a density gradient gradually increased from an interior of the foamed article (106) to an exterior of the foamed article (106).
